(19) Europäisches Patentamt
European Patent Office
Office européen des brevets

(11) **EP 2 775 458 A2**

(12) **EUROPEAN PATENT APPLICATION**

(43) Date of publication:
**10.09.2014 Bulletin 2014/37**

(51) Int Cl.:
***G07C 9/00*** (2006.01)

(21) Application number: **14157757.7**

(22) Date of filing: **05.03.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **06.03.2013 US 201313787623
29.08.2013 US 201314014071**

(71) Applicant: **Wirelesswerx International, Inc.
Urbanizacion Marbella (PA)**

(72) Inventors:
• **Ashley, James Jr.**
  **Norco, CA 92860 (US)**
• **Mooney, Patrick**
  **Brea, CA 92823 (US)**
• **Blattner, Patrick**
  **Dana Point, CA 92629 (US)**
• **Ashley, James Sr.**
  **Anaheim, AZ 92806 (US)**

(74) Representative: **Sandri, Sandro et al
Europatent-Euromark Srl
Via Locatelli, 20
37122 Verona (IT)**

(54) **Controlling queuing in a defined location**

(57)     A facility includes a location node having a transceiver of wireless signals. It communicates with a central hub and mobile devices in the facility. The nodes are located in a specific location in the facility, and provide data about the movement of the entities in the facility relative to the location. Includes at least one of entry into the location, departure from the location, amount of time spent in the vicinity of the location; and the data being transmitted to the operator in at least one of real time or being for storage and analysis at a later time for use by the operator. There can be a series of location nodes in the facility. The nodes provide data about the movement of the entities in the facility, such data including the travel path of the entities in the facility.

*FIG. 1*

EP 2 775 458 A2

Description

**BACKGROUND**

This application relates generally to monitoring wireless devices and to messaging by wireless communication between wireless devices in a specific geographical location and facilitating the movement of entities in and out and/or through the location.

In particular the disclosure relates to improving queuing in the sense that entities in the location are better served by permitting for shorter queuing and times in the queue

**SUMMARY OF THE DISCLOSURE**

The present disclosure relates to an apparatus, system, and method for a facility includes a location node having a transceiver of wireless signals. The node communicates with a central hub and mobile devices in the facility. The nodes are located in a specific location in the facility, and provide data about the movement of the entities in the facility relative to the location. Includes at least one of entry into the location, departure from the location, amount of time spent in the vicinity of the location; and the data being transmitted to the operator in at least one of real time or being for storage and analysis at a later time for use by the operator. There can be a series of location nodes in the facility. The nodes provide data about the movement of the entities in the facility, such data including the travel path of the entities in the facility. In one form the facility is a physically defined structure formed by physical walls.

In one or more embodiments, the system involves using a geographical zone, where the zone is selectively a preconfigured geographical zone. The zone includes a plurality of nodes. The system also includes sending messages between one or more of the users and one or more control stations, where the message communications are targeted to at least one or multiple users. The nodes are arranged in a multi-dimensional sense, the multi-directional sense selectively being a three-dimensional sense in the x, y and z axes or coordinates. The system further includes obtaining and mining data related to the location of a mobile user according to the placement of nodes in a multi-dimensional sense.

In one or more embodiments, the system employs a Bluetooth™ equipped mobile personal device associated with a user, where the device communicates with Bluetooth™ enabled location nodes in a mesh network. The Bluetooth™ equipped mobile personal device contains at least one specific algorithm to determine the relatively precise location of the user within the mesh network. Also, when the Bluetooth™ equipped mobile personal device is within the range of certain location nodes, specified events are triggered.

In one or more embodiments, the system includes the downloading of a commercial message, selectively an advertisement to the Bluetooth™ equipped mobile personal device. The system further includes transmitting to selected nodes the user's location data. The selected nodes transmit the data to a control center via other nodes within selectively at least one of a mesh network, relay stations, or intermediate supplementary stations. The user's location data is processed and analyzed at selectively at least one of a control center or an intermediate supplementary station.

In one or more embodiments, the system includes using a geographical zone, where the zone is multi-dimensional, and messaging a movable entity that has a transponder or subscriber device. The device being selectively a cell phone, personal digital assistant (PDA), pager, computer, or device which is configured to be in wireless communication with other devices through a suitable network. In addition, the system includes loading from a computing device to a memory in a transponder or subscriber device a plurality of coordinates; mapping the coordinates on a pixilated image wherein the assigned pixilated image is configurable; and forming a contiguous array of pixels that enclose a shape in the pixilated image to form the geographic space.

In one or more embodiments, the regulating comprises at least one of monitoring, controlling, and visualizing the movement the individuals, the vehicles, or the other moveable entities. The plurality of coordinates are entered by a user of a computer device, and transmitted to the transponder or subscriber device. The control center enters plurality of coordinates by selecting points in a map, and calculates geographical coordinates of each selected point in the map. Also, the control center enters the plurality of coordinates by entering on a computer the longitude, latitude, and elevation. A multi-dimensional shape of a geographical area is the shape of a non-regular geometrical shape. In the present system, messages are communicated with entities according to the location of the entities as mapped in the multi-dimensional space.

**DRAWINGS**

The foregoing aspects and advantages of the present disclosure will become more readily apparent and understood with reference to the following detailed description, when taken in conjunction with the accompanying drawings, wherein:

**EP 2 775 458 A2**

Figure 1 illustrates the high-level architecture of a computer system for controlling and monitoring movable entities.

Figure 2 illustrates a component layout of a transponder or subscriber device used in a system for controlling and monitoring movable entities.

Figure 3 is a representation of interior traffic in a location.

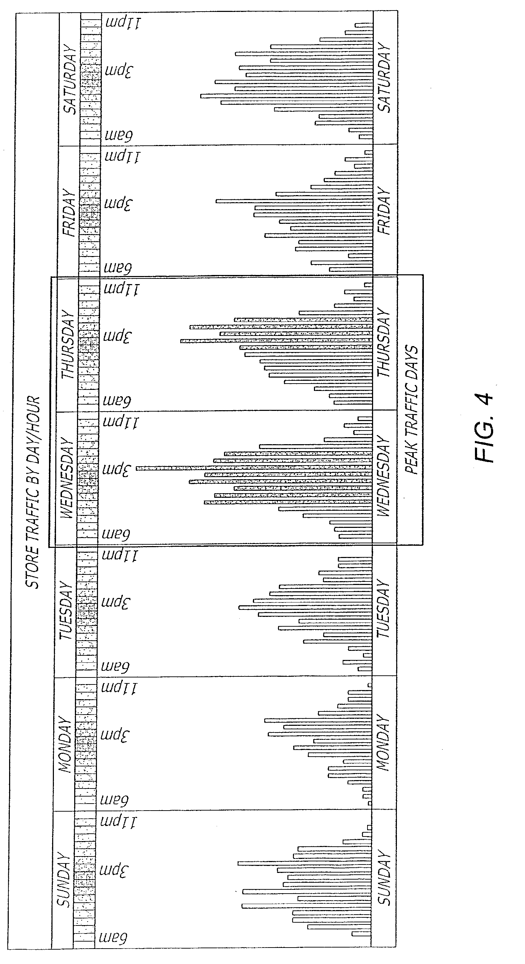

Figure 4 is a graphical representation of store traffic by day/hour.

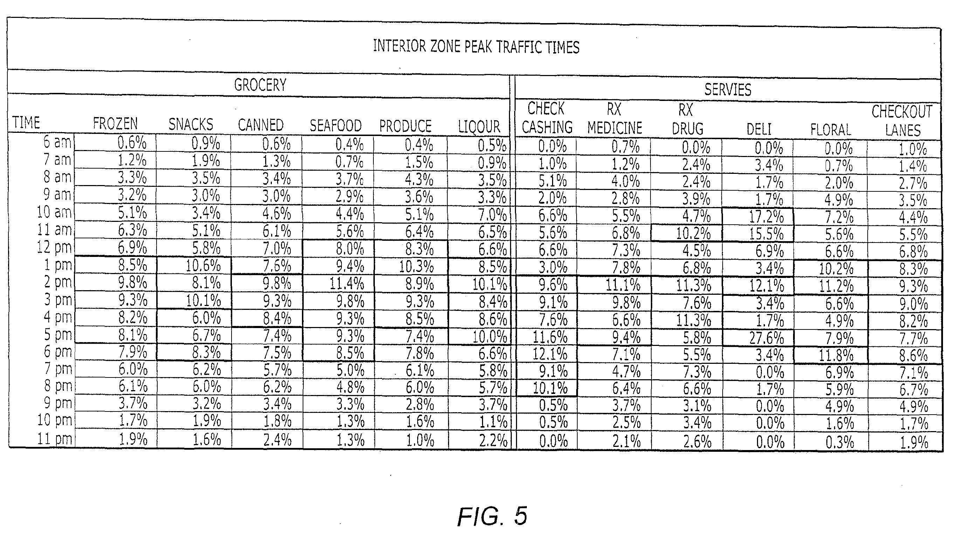

Figure 5 is a tabular representation of store traffic at different zones by day.

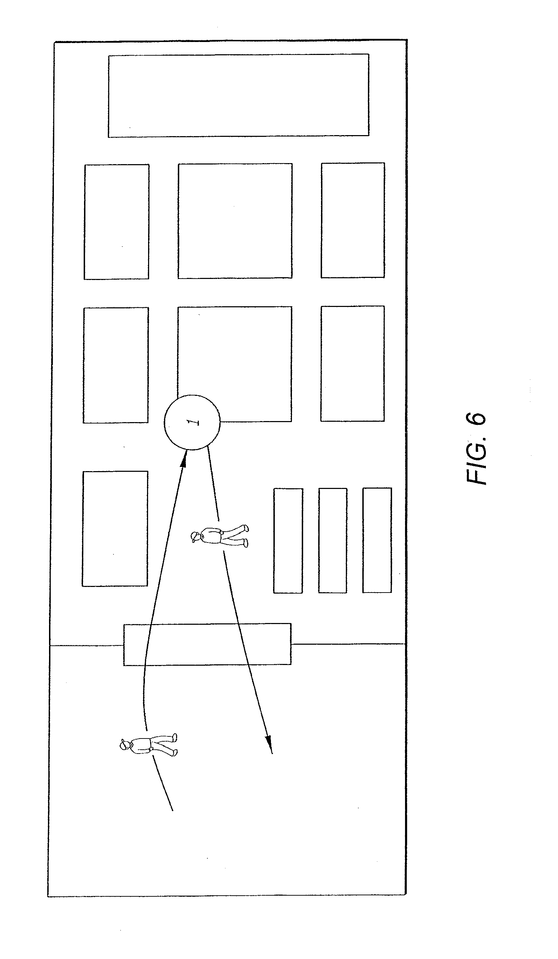

Figure 6 is a representation of interior showrooming traffic in a location.

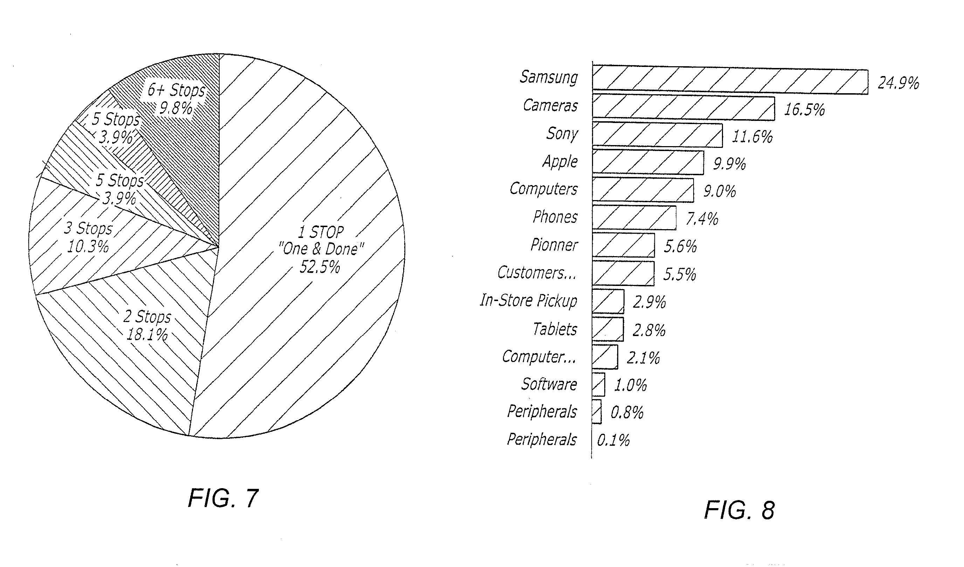

Figure 7 is a graphical representation of showrooming traffic in a location.

Figure 8 is a tabular representation of showrooming traffic in a location.

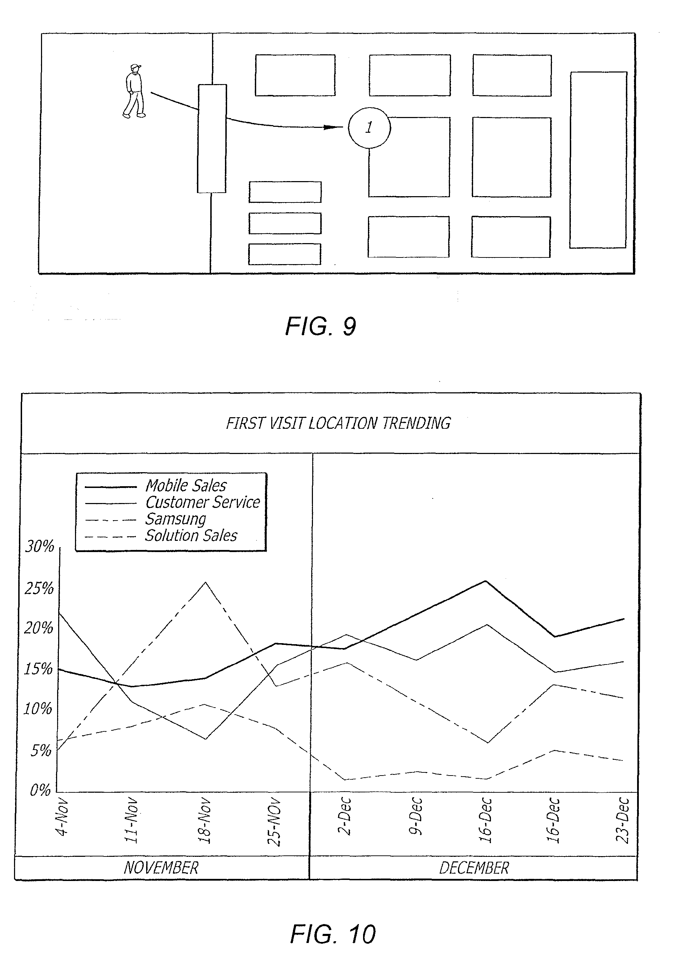

Figure 9 is a representation of interior first visit traffic in a location.

Figure 10 is a graphical representation of interior first visit traffic in a location.

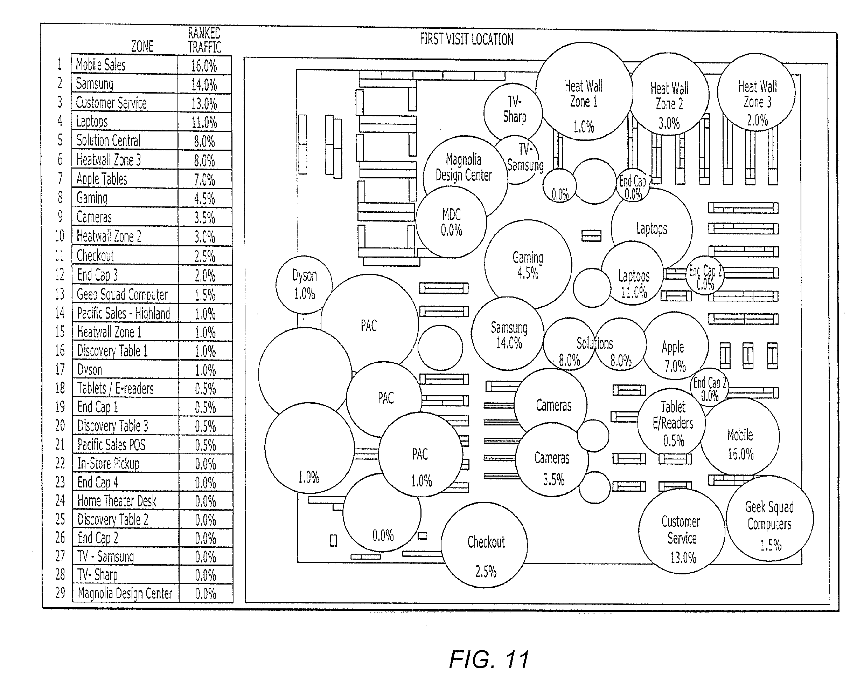

Figure 11 is a pictorial representation of interior first visit traffic in a location.

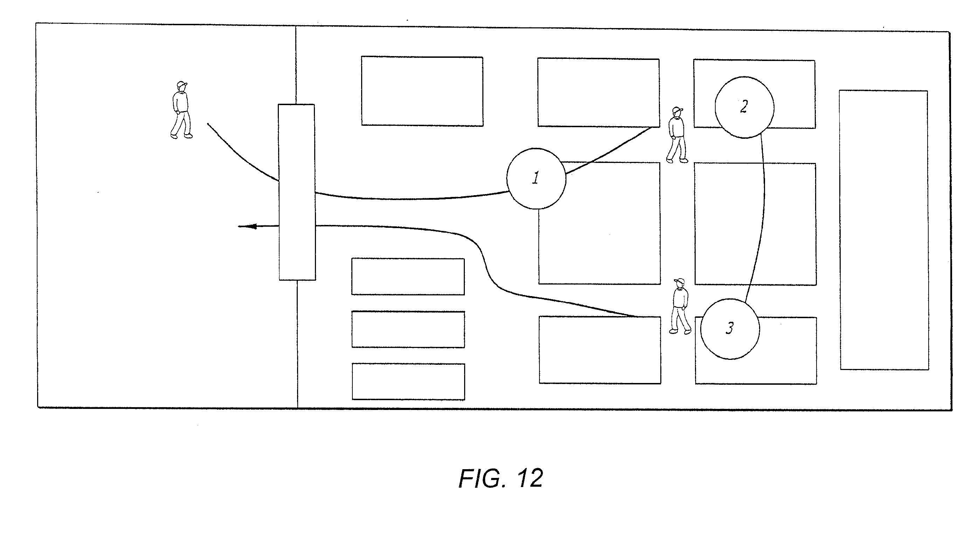

Figure 12 is a representation of traffic footprint and dwell in a location.

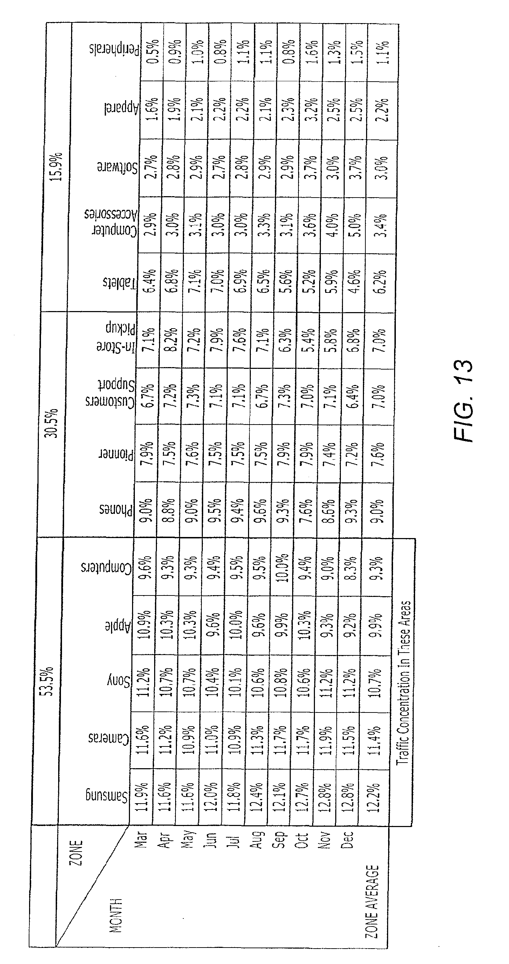

Figure 13 is a tabular representation of traffic footprint and dwell in a location.

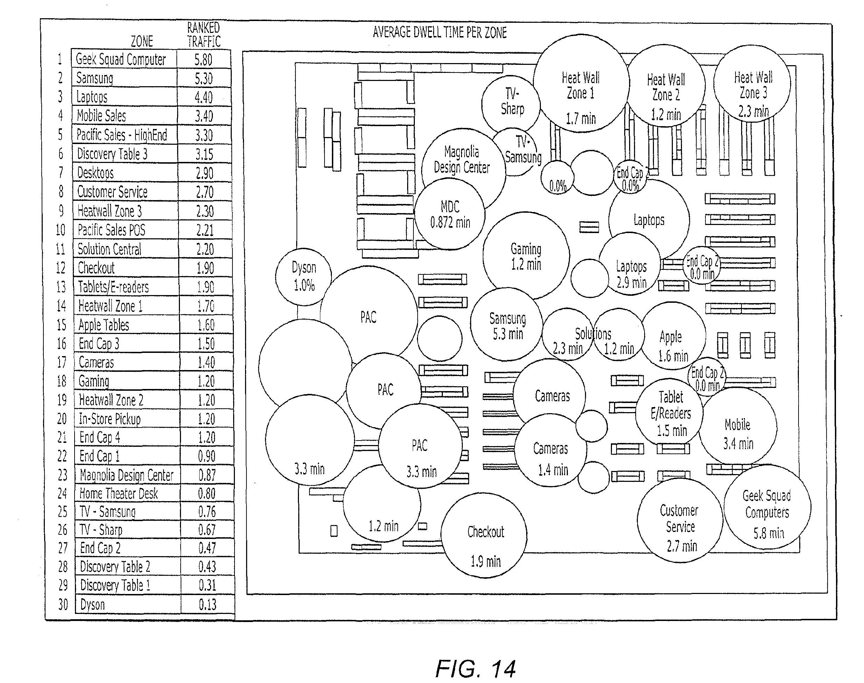

Figure 14 is a pictorial representation of traffic footprint and dwell in a location.

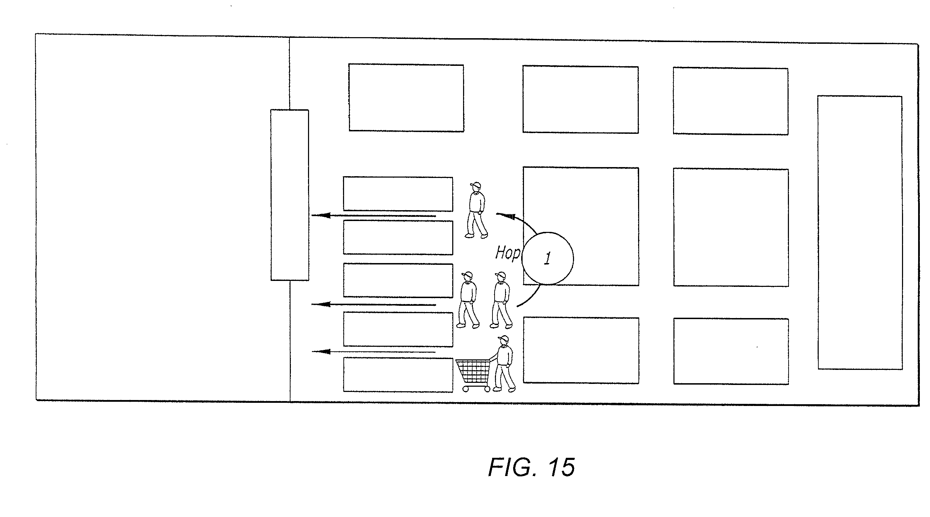

Figure 15 is a representation of wait times and lane hopping in a location.

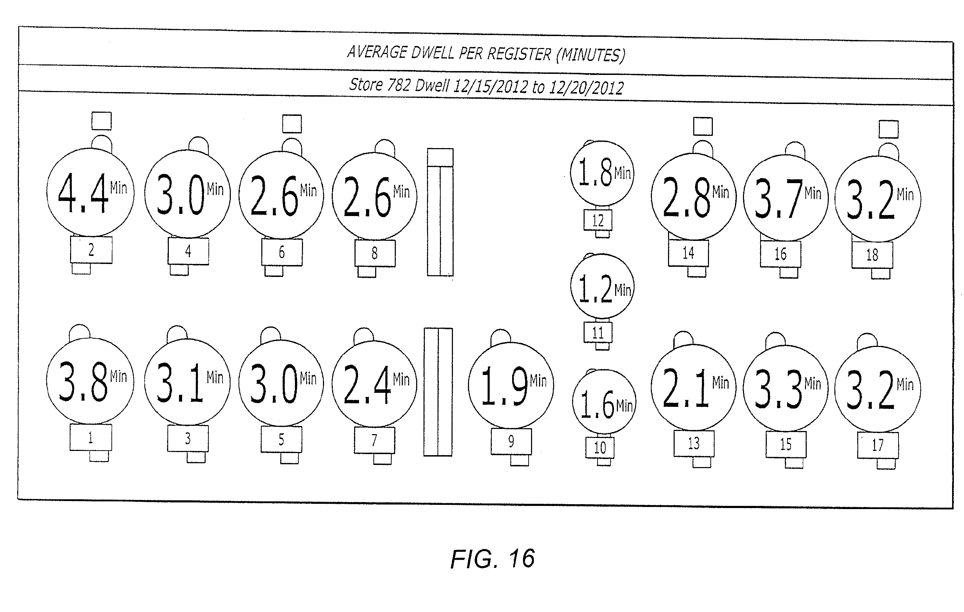

Figure 16 is a tabular representation of average dwell per register in a location.

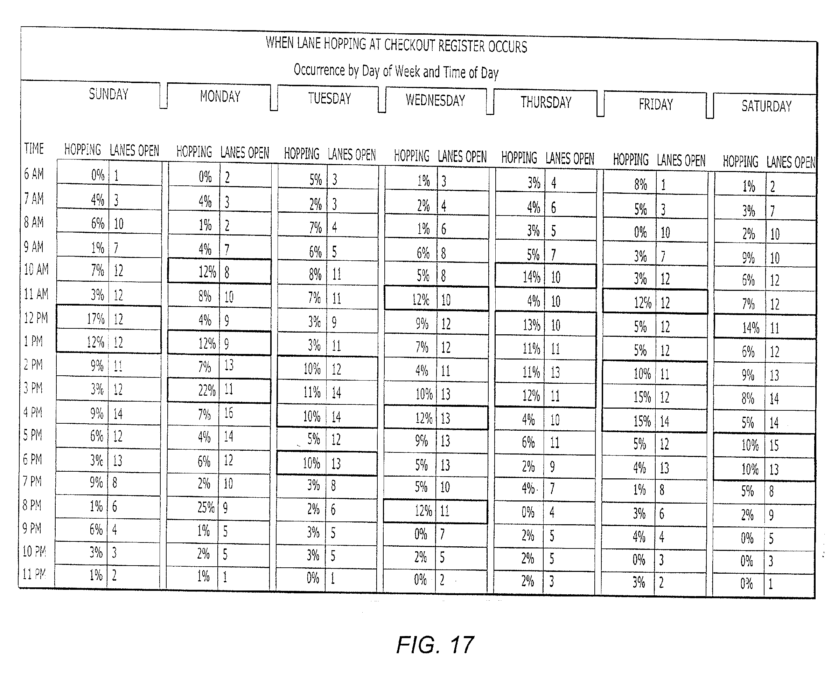

Figure 17 is a tabular representation of lane hopping at registers in a location.

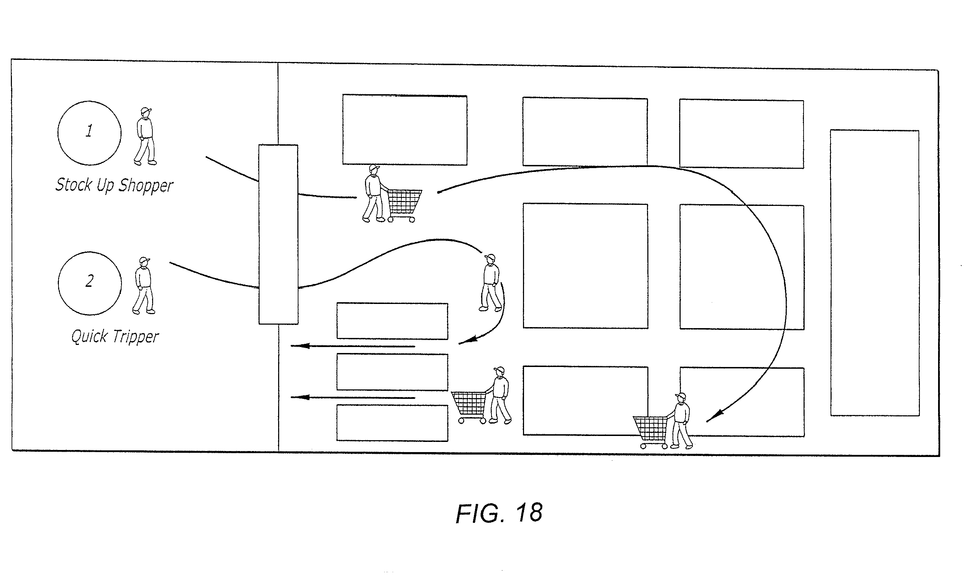

Figure 18 is a representation of basket size and quick trippers in a location.

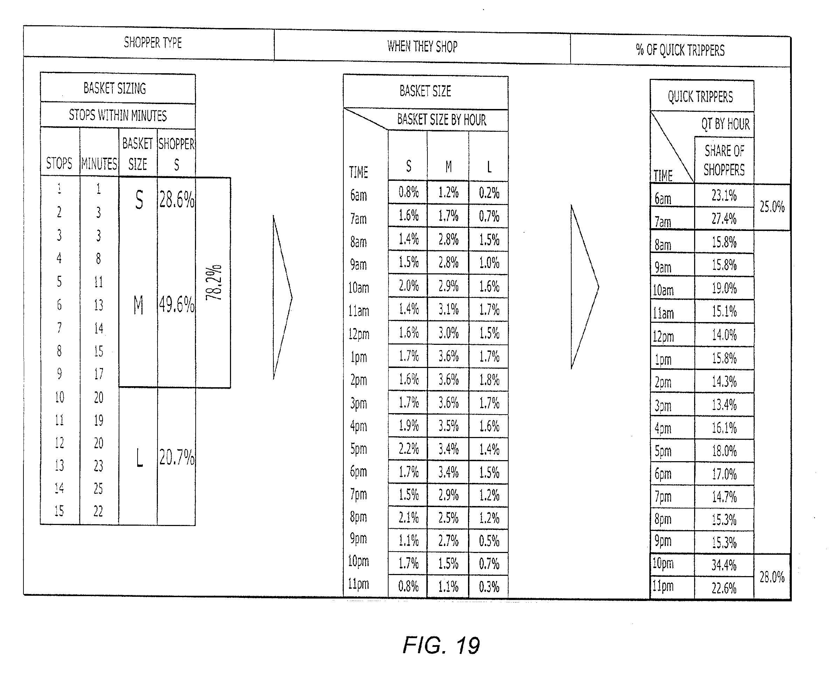

Figure 19 is a tabular representation of shopper type, when they shop and percentage of quick trippers in a location.

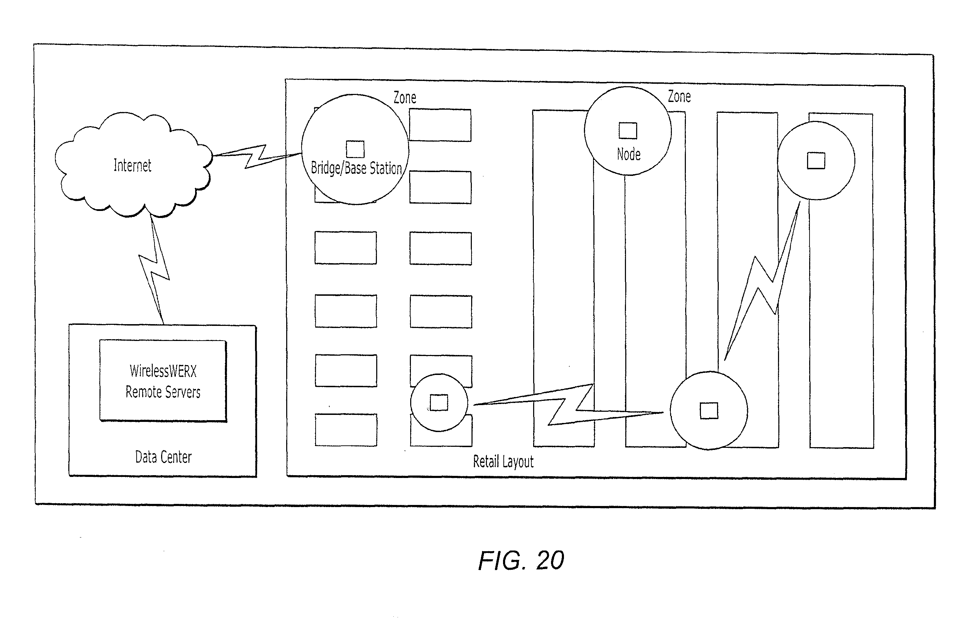

Figure 20 is representation of nodes at the center of zones forming a network to the internet.

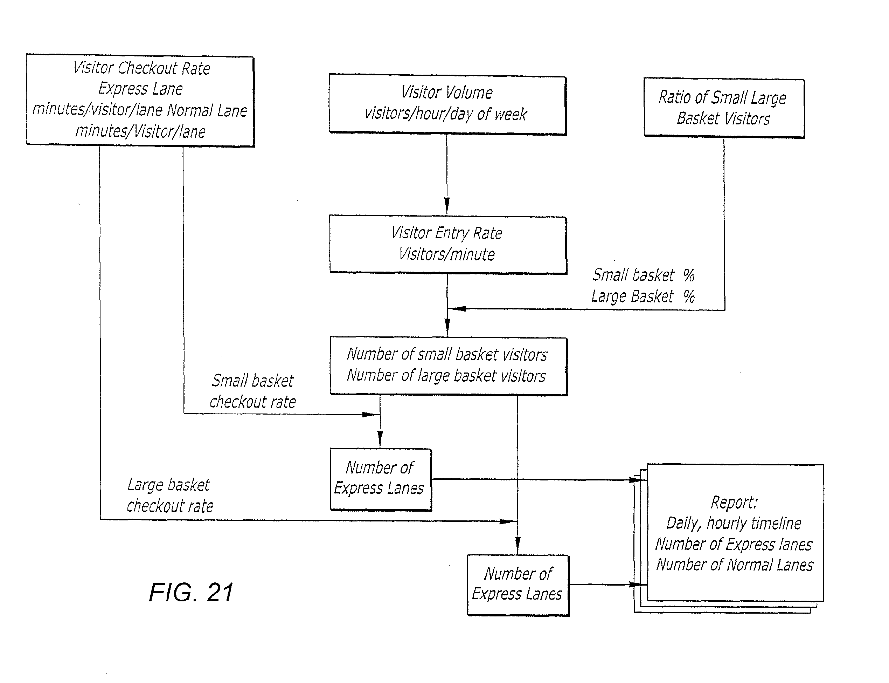

Figure 21 is an algorithm data flow diagram.

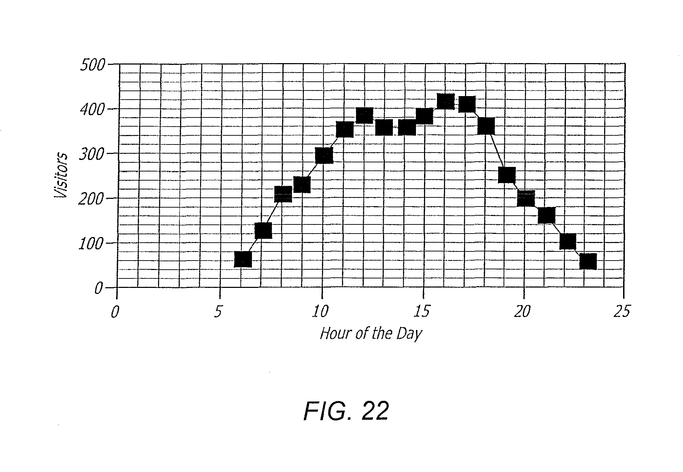

Figure 22 is a graphical representation of the number of visitors over time of day to a facility.

Figure 23 is a second algorithm data flow diagram.

## DETAILED DESCRIPTION

The present disclosure provides a system and method that provides a location-based service to an operator of a facility. In one form, the facility is a physically defined structure formed by physical walls.

The facility includes a series of location nodes, the location nodes including transceivers of wireless signals, and being for transmitting the signals received to a central hub for processing the received signals. The nodes are located in spaced apart positions in the facility. The nodes are for wireless communication with movable entities in the facility thereby to establish the location and movement of entities in the facility, the entities having wireless communicating units for transmitting signals wirelessly to the nodes

The nodes provide data about the movement of the entities in the facility, and such data includes at least one of entry into the facility, departure from the facility, amount of time spent in the vicinity of nodes located in the spaced apart positions; the travel path of the entities in the facility.

The data is for transmittal to the operator in at least one of real time or for storage and analysis at a later time for use by the operator.

In one form, the facility includes multiple checkout locations. Persons leaving the facility need to pass through at least one of the checkout locations prior to leaving the facility. The nodes are located in a physical location to be related to different respective checkout locations of the multiple checkout locations. Data from the location nodes includes at least one of the number of entities passing through different checkout locations, the speed with which entities pass through the different checkout locations, the number of entities in the vicinity of the different respective checkout locations.

The facility can be a shopping business. The check-out locations include registers for receiving payment for items purchased in the shopping business. The data includes at least one of the entity check-out rate from the facility; the entity entry volume to the facility, the entity entry volume relative to different time periods; the rate of entity entry to the facility, the rate at which entities enter and leave the facility; the amount of time spent by different entities in the facility.

The data also relates to distinguish the number of entities spending different amounts of time in the facility. The different check-out facilities are designated for have the low volume shoppers in dedicated checkout facilities and the data includes information about the numbers of low volume shoppers, high volume shoppers and the rate of time shoppers spend in the facility and at the checkout locations.

The system can include two, multidimensional such as three dimensional, geographical zones for characterizing the movement and behavior patterns of a mobile user moving through an array of the geographical zones.

Where the location is a retail store, the store is divided into multi-dimensional zones where the radius of each zone is configurable, selectively from about three to about thirty feet.

The nodes are detection devices that are radio transmitter/receivers, placed at the center of each zone. The devices are capable of detecting the zone entry and exit events of mobile phones equipped with selectively a Bluetooth, WI-FI and other short range radio technologies or NFC systems. Each device is an element or node of a network connected to the Internet through a Wi-Fi bridge or base station, and selectively there are several separate networks formed by the nodes.

As a mobile user moves through the store, zone entry and exit events are collected, time stamped, and passed along the networks to the Internet. The event trail is routed to a remote server and placed in a database for analysis where behavior details are extracted from the entry/exit data.

The resultant data sets apply an algorithm to manage checkout lane allocations based on visitor rate of entry and visitor rate of checkout. The checkout rates are selectively used to determine lane allocations with a capacity to check-out visitors at the same rate as they are entering the store, thereby providing the opportunity for a substantially continuous flow of visitors from entry to exit.

The algorithm establishes a visitor checkout rate for small basket and large basket visitors from empirical checkout data. Visitor entry rate and visitor pathing information is used to determine the number of small basket and large basket visitors.

The algorithm establishes checkout rates which are then used to determine the required number of lanes to checkout, the number of small and large basket visitors at the same rate as the rate of entry. The algorithm output is selectively a daily timeline defining the number and type of lane allocations, selectively express and normal lanes. This can be selectively for each hour of the working day for selectively each day of the week, thereby providing a tool for preplanning store operations and personnel assignments.

In another form of the disclosure there is a location-based service to an operator of a facility, the facility being a physically defined structure formed by physical walls comprising providing in the facility with a location node. The location node includes a transceiver of wireless signals, and is for transmitting the signals received to a central hub for processing the received signals.

The node is located in a specific location in the facility, and the node is for wireless communication with movable entities in the facility thereby to establish the location and movement of entities in the facility. The entities have wireless communicating units for transmitting signals wirelessly to the node. The node provides data about the movement of the entities in the facility relative to the location such data including at least one of entry into the location, departure from the location, amount of time spent in the vicinity of the location. The data is transmitted to the operator in at least one of real time or being for storage and analysis at a later time for use by the operator.

The facility includes at least one checking location, and persons passing through the facility should pass through that at least one of the checking locations. Upon exit should an entity not pass through a checking location, the system determines that someone visited but did not necessarily buy, or the visit was not converted to a sale. Thus the nodes can be strategically placed in the facility to permit the mining of the needed data. A node is located in a physical location to be related to the at least one checking location and wherein data from the location nodes includes at least one of the number of entities passing through the checking location, the speed with which entities pass through the checking location, the number of entities in the vicinity of the checking location.

The facility can be an airport terminal and the checking facility is a security checking station. Selectively there are multiple stations.

In one form of the disclosure, there is a method for alleviating queuing in grocery stores. This can be around the concept that two or three dimensional geographical zones can be used to characterize the movement and behavior patterns of a mobile user as the user moves through an array of the geographical zones.

A retail store can be divided into two or three-dimensional zones where the radius of each zone is configurable, from three to thirty feet. Figure 31 illustrates a zoned retail layout. The detection devices, small radio transmitter/receivers, placed at the center of each zone, and are capable of detecting the zone entry and exit events of mobile phones equipped with either a Bluetooth or WI-FI radio or NFC system. Each device is an element or node of a network connected to the Internet through a Wi-Fi bridge or base station as shown in Figure 39. Typically, several separate networks are formed by the nodes.

As a mobile user moves through the store, zone entry and exit events are collected, time stamped, and passed along the networks to the Internet. Ultimately, the event trail is routed to remote servers and placed in a database for analysis where behavior details are extracted from the entry/exit data.

Data Analysis

The capability to characterize shopper patterns and behavior with respect to daily and seasonal conditions has provided insights and unique management opportunities previously unavailable to optimize resource applications, labor allocation, and store operations.

Using a Metrics Data System (MDS), shopper data was collected over a period of two months in a large grocery establishment open 6AM to 11 PM, seven days a week.

The resultant data sets were used to develop an algorithm. These include algorithm logic for Basket Size Assignment; the stops within a designated period of time; and the overall pattern / trip length of time.

The historical trending is considered looking at daily and historical trends of basket size and take a weighted average based on time of day and day of week to determine lane type and labor needed. The historical trip length based on basket size and time of day in 5 minute increments to alert the store manager of the number of lanes that will be needed to satisfy the throughput for that time of day and day of week is considered.

The capacity vs. demand algorithm used weighted average on basket size during day of week and hour of day, the historical lane throughput per hour and the amount of traditional lane hopping that occurs. On average, a new lane is opened when key registers hit 94% of capacity based on day of week and hour of day.

Other features of the algorithm include:

A. Adjustable throughput per hour regular lanes=Set desired throughput per hour for regular lanes

B. Adjustable throughput per hour express lanes=Set desired throughput per hour for express lanes

C. Adjustable daily store customers based on historical door counts

D. Day selector allows the store manager to select the day of week and our model views the historical trends for that day and assigns the number of lanes and lane types by hour based on adjusted desired throughput per lane to optimize checkout lane allocations based on visitor rate of entry and visitor rate of checkout. Checkout rates are used to determine lane allocations (type and number) with a capacity to check-out visitors at the same rate as they are entering the store, thereby providing the opportunity for a continuous flow of visitors from entry to exit.

The algorithm establishes a visitor checkout rate for small basket and large basket visitors from empirical checkout data. Visitor entry rate and visitor pathing information are used to determine the number of small basket and large basket visitors. Checkout rates are then used to determine the required number of lanes to checkout the number of small and large basket visitors at the same rate as the rate of entry.

The algorithm output is a daily timeline defining the number and type of lane allocations (express and normal) for each hour of the working day for each day of the week, providing a tool for preplanning store operations and personnel assignments.

Historical data can be used to preplan, while real-time MDS data can be used for adjustments as required.

**Algorithm Description**

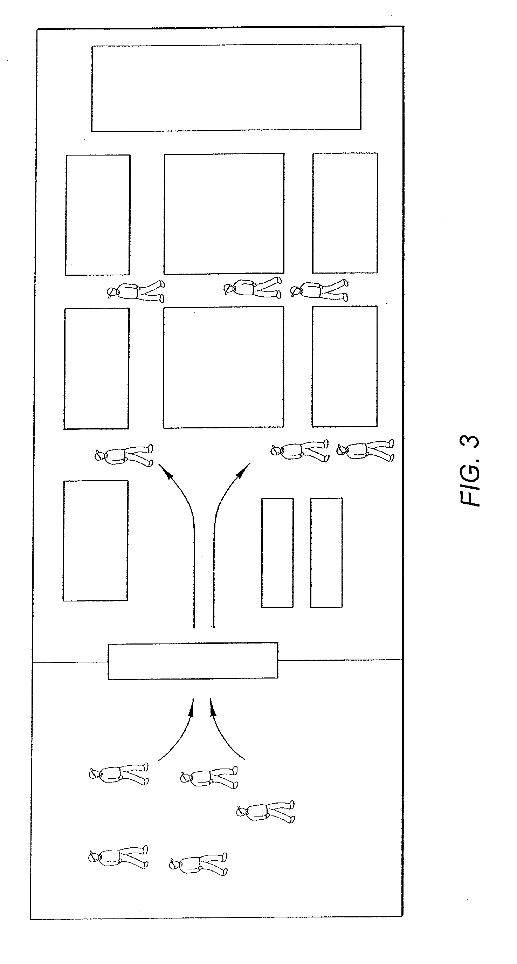

The algorithm uses four separate data sets as shown in the flow diagram, Figure 3.

- Visitor Checkout Rate

- Visitor Volume
- Visitor Entry Rate
- Ratio of Small/Medium Baskets to Large Baskets

**Visitor Checkout Rate**

Visitor checkout rate is established from empirical data. Small to medium baskets are defined as those containing 1 to 15 items. Large baskets are defined as those containing 16 to 60 items. Retailer checkout rates are calculated based on item scan time, payment and receipt return, and the use or nonuse of a bagger.

The rates used for grocery are shown in the table below. Median values were used for the calculations discussed. A detailed description of the derivations and calculations of the table values is provided in **Checkout Rate Derivation Description**

**Table 1. Checkout Rates vs. Basket Size**

| Throughput, per thour   visitors | Purchased items | throughput/lane ~ vis/minute | hroughput/lane ~ vis/hour |
|---|---|---|---|
| **Express lane, no bagger** | | | |
| Minimum | | | |
| Median | | | 7 |
| Maximum | | | |
| **Normal lane, with bagger** | | | |
| Minimum | | | |
| Median | | | 4 |
| Maximum | | | |

**Visitor Volume and Visitor Entry Rate**

Visitor volume is the number of visitors per hour per day for each day of the week. It is used to establish the visitor entry rate, visitors per hour for each hour of the working day.

The table below is a data set for a typical working day, beginning at 0600 or 6:00AM in the morning, and ending at 2300 or 11:00PM in the evening.

**Table 2. Visitors per Hour**

| Hour of the day | Visitors per hour |
|---|---|
| 0600 | 66 |
| 0700 | 127 |
| 0800 | 207 |
| 0900 | 234 |
| 1000 | 299 |
| 1100 | 356 |
| 1200 | 389 |
| 1300 | 363 |
| 1400 | 360 |
| 1500 | 389 |
| 1600 | 416 |
| 1700 | 413 |
| 1800 | 365 |
| 1900 | 252 |
| 2000 | 202 |
| 2100 | 164 |
| 2200 | 106 |
| 2300 | 60 |

The visitors per hour provide the entry rate derived from the MDS entry counter.

**Ratio of Basket Sizes**

Visitor event trails are processed to extract the number of stops (dwell times in a zone). Empirical data has shown that the number of stops provides a reliable measure of the number of basket items. These data combined with point of sale truth data also show that visitors with small to medium baskets with 1 to 15 items are consistently 75% of the visitor population, and the large basket visitors with 16 to 60 items make up the remaining 25%. Also the length of a stop is a valuable component in determining basket size. A visitor checkout rate can be for selectively small basket, medium basket, and large basket visitors from empirical checkout data, visitor entry rate and visitor pathing information is used to determine selectively the number of small basket, medium basket, and large basket visitors.

This ratio is used to determine the number of each of the two groups of visitors. For example, If the number of visitors at the hour of 1400 is 360, then,

- 75% of 360 is (0.75)(360) = 270 visitors with small to medium baskets
- and
- 25% of 360 is (0.25)(360) = 90 visitors with large baskets

**Allocation of Checkout Lane Types and Quantities**

The quantity of express and normal lanes required to checkout the current number of visitors with large and small baskets can be determined the checkout rates discussed earlier.

Using the previous example, it was determined that there are 270 small to medium basket shoppers entering the store during the hour of 0600. These visitors will use the express lanes.

Considering a median basket size of 7 items and it's checkout rate of 47.37 visitors per hour, the number of express lanes required to checkout the small to medium basket visitors at the same rate they are entering is given by dividing the visitor rate of entry by the express lane checkout rate,

- 270 / 47.37 = 6 express lanes

Similarly, the number of normal lanes required is given by dividing the large basket visitor entry rate by the normal lane checkout rate,

- 90 / 22.64 = 4 normal lanes

Table 3 illustrates a complete day of allocations using daily averages of MDS data over a two month period.

Historical data recorded over yearly intervals can be averaged and used to preplan personnel requirements for each working hour of each day of the year. It is expected that historical records in combination with MDS real time data to accommodate daily and hourly variations can provide a practical, rational means of quantifying personnel assignments and requirements as well as optimizing customer checkout processes and wait times.

**Table 3. Checkout Lane Allocations Based on Visitor Entry Rate and Visitor Basket Size**

| Hour of the day | Visitors per hour | Small to medium baskets | express lanes | Large baskets | normal lanes | total lanes |
|---|---|---|---|---|---|---|
| 0600 | 66 | 50 | 1 | 17 | 1 | 2 |
| 0700 | 127 | 95 | 2 | 32 | 1 | 3 |
| 0800 | 207 | 155 | 3 | 52 | 2 | 5 |
| 0900 | 234 | 176 | 4 | 59 | 3 | 7 |
| 1000 | 299 | 224 | 5 | 75 | 3 | 8 |
| 1100 | 356 | 267 | 6 | 89 | 4 | 10 |
| 1200 | 389 | 292 | 6 | 97 | 4 | 10 |
| 1300 | 363 | 272 | 6 | 91 | 4 | 10 |
| 1400 | 360 | 270 | 6 | 90 | 4 | 10 |
| 1500 | 389 | 292 | 6 | 97 | 4 | 10 |
| 1600 | 416 | 312 | 7 | 104 | 5 | 12 |
| 1700 | 413 | 310 | 7 | 103 | 5 | 12 |
| 1800 | 365 | 274 | 6 | 91 | 4 | 10 |

(continued)

| Hour of the day | Visitors per hour | Small to medium baskets | express lanes | Large baskets | normal lanes | total lanes |
|---|---|---|---|---|---|---|
| 1900 | 252 | 189 | 4 | 63 | 3 | 7 |
| 2000 | 202 | 152 | 3 | 51 | 2 | 5 |
| 2100 | 164 | 123 | 3 | 41 | 2 | 5 |
| 2200 | 106 | 80 | 2 | 27 | 1 | 3 |
| 2300 | 60 | 45 | 1 | 15 | 1 | 2 |

There is a system and method of providing a location-based service to an operator of a facility, the facility being a physically defined structure formed by physical walls comprises providing in the facility a series of location nodes, the location nodes including transceivers of wireless signals, and being for transmitting the signals received to a central hub for processing the received signals. The nodes are located in spaced apart positions in the facility, the nodes being for wireless communication with movable human entities in the facility thereby to establish the location and movement of human entities in the facility.

The human entities have wireless communicating units for transmitting and receiving signals wirelessly to the nodes, each unit being unique for each human entity;

The nodes include detection devices, the devices including radio transmitter/receivers, the devices being capable of detecting the zone entry and exit events of the human entities, and wireless communicating units of human entities. The wireless communicating units are mobile phone equipped with selectively a Bluetooth or WI-FI radio or NFC system.

The nodes provide data about the movement of the human entities in the facility, such data including at least one of entry into the facility and departure from the facility. Additionally the data includes at least one of amount of time spent in the vicinity of nodes located in the spaced apart positions; and the travel path of the entities in the facility. The nodes are located to monitor entry and exit of human entities from the facility.

The data is transmitted to the operator in at least one of real time or being for storage and analysis at a later time for use by the operator.

An algorithm processes the data, the data including entry into the facility and departure from the facility.

The facility includes multiple checkout locations wherein persons leaving the facility need to pass through at least one of the checkout locations prior to leaving the facility. The nodes are located in a physical location to be related to different respective checkout locations of the multiple checkout locations. The data from the location nodes includes at least one of the number of human entities passing through different checkout locations, the speed with which human entities pass through the different checkout locations, and the number of human entities in the vicinity of the different respective checkout locations.

The facility can be a shopping business and the check-out locations include registers for receiving payment for items purchased and the data is obtained by applying including an the algorithm for establishing checkout rates and determining the required number of lanes to checkout the number of small and large basket visitors at the same rate as the rate of entry into the facility.

The system and method of the disclosure is a shopping business and the checkout locations include registers for receiving payment for items purchased in the shopping business, and the data includes at least one, three, five or all of:

the human entity check-out rate from the facility;

the human entity entry volume to the facility,

the human entity entry volume relative to different time periods;

the rate at which human entities enter and leave the facility;

the amount of time spent by different human entities in the facility;

data relating to distinguish the number of human entities spending different amounts of time in the facility; and

the different check-out facilities are designated for low volume shoppers in dedicated checkout facilities and the data includes information about:

the numbers of the low volume shoppers, and

the numbers of high volume shoppers;

the rate of time shoppers spend in the facility, and

the rate of time shoppers spend at the checkout locations.

The algorithm processes the data.

The method and system of the disclosure includes identifying the same human entities repetitively when they are repetitively in the facility, and thereby obtain data about the shopping activities of that human entity. Further, the method or system includes identifying the same human entities repetitively when they are repetitively in the facility, and thereby obtain data about the shopping activities of that human entity. Also, the system and method includes identifying the human entities independently of the shopping basket, and thereby obtain data about the shopping activities of that human entity.

Further, the method and system applies an algorithm output which is selectively a daily timeline defining the number and type of lane allocations, selectively express and normal lanes for different times of the working day for different days of the week, thereby providing a tool for preplanning store operations and personnel assignments.

Queuing Concept

The Queuing algorithm is developed around the following concept:

The optimum visitor checkout rate can be achieved by varying the number of active Express lanes (1 to 15 basket items) and the number of active Normal lanes (greater than 15 basket items) on the basis of the number of small-basket and large-basket visitors that are in the store at a given time.

This is possible with the Wireless Werx (TM) data system where the WiFi/Bluetooth network provides the capability of determining the ratio of small-basket to large-basket visitors by sampling the number of stops made by visitors throughout the store. When those ratios are applied to the actual visitor population in the store, obtained from door-counter data, actual small-basket and large-basket totals can be calculated, and the optimum numbers of express and normal lanes can be calculated.

The following algorithms are used to determine the optimum numbers of Express and Normal checkout lanes, LX and LN.

$LX = R1(nS/100)T1$, where LG is small basket and nS is the number of small baskets or a representation of low volume
Where:

| | |
|---|---|
| LX = Number of required Express lanes, | lanes |
| R1 = Visitor entry rate, | visitors/hour |
| nS = Percent of small basket or low volume visitors, | % |
| T1 = Checkout rate for Express lane, | 47.37 visitors/hour/lane |

$LN = R1(nLG/100)T2$, whew LG is a large basket, and nLG is the number of large baskets or representation of high volume.
Where:

| | |
|---|---|
| LN = Number of required Normal lanes, | lanes |
| R1 = Visitor entry rate, | visitors/hour |
| nLG = Percent of non large basket or high volume visitors, | % |
| T2 = Checkout rate for Normal lane, | 22.64 visitors/hour/lane |

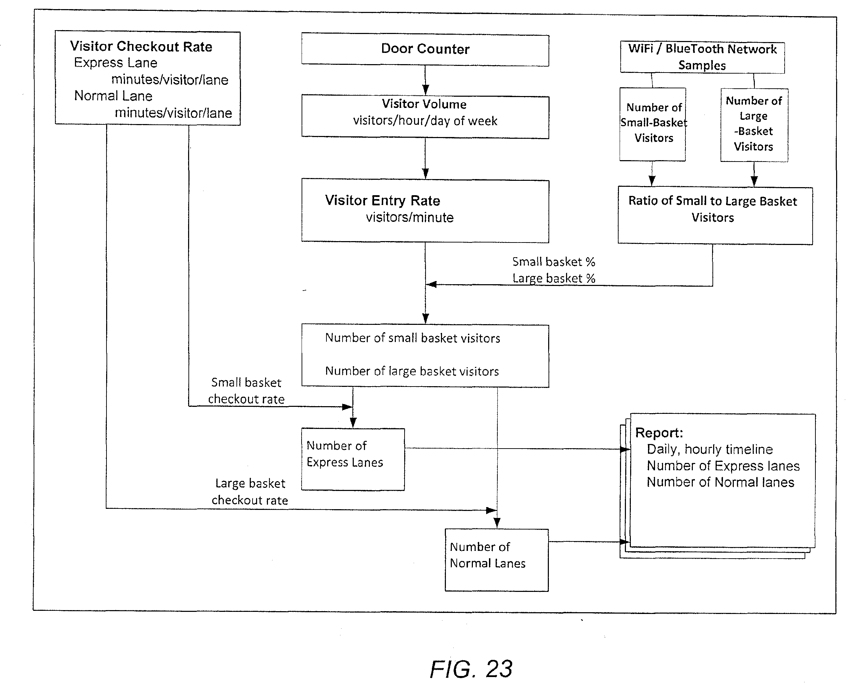

This is further illustrated in Figure 23.
The algorithms above are premised on lane openings or availability. Since many persons visiting a facility, such as a shopping area do not use carts or baskets, to rely on RFID related to a cart does not provide the data meaningful or accurate to mine as appropriate or as accurate as monitoring the movement of a human with a person transceiver such as a mobile phone or smart phone or PDA. This more accurately monitors the movement of individuals and their activities which can be related to queuing demands and needs over time. By monitoring the size of a volume which can be inferred by the number of stops a human makes in a facility, more meaningful data is obtained.

Other algorithms can apply for use at an airport (or other mass transit facility) where there is queuing, and these algorithms apply characteristics relating to waiting times indifferent queues and combined wait times in different queues.

## Monitor System Hardware

The monitor system consists of three separate element types: one or more nodes, one or more base stations, and a remote system server.

## Nodes

The node is a small radio frequency (RF) receiver and transmitter (transceiver), approximately the size of a deck of cards. It can be either a Bluetooth device or a Wi-Fi device or NFC system. In either case, software in the System Server contains its ID and the exact geographical location of its position in the retail layout as well as the diameter of its assigned virtual zone area.

The Bluetooth node continuously transmits a general inquiry message (3200 times per second) and listens for a mobile device response. Mobile devices continuously listen for inquiries, and after receiving one, respond with a message containing its unique Bluetooth MAC address and its device type.

Firmware in the node collects the MAC address, type, and the node received signal strength (RSS), and returns these information items, via the Internet, to the Scan Service software resident in the Managed System Server.

After the initial reception from a mobile device, its unique Bluetooth MAC address is registered and time stamped. Subsequent messages are sampled at intervals of one to thirty seconds, and an event trail time history is developed as the mobile device moves through the array of zones, entering, dwelling in, and exiting from one zone to another. Mobile device positions relative to the node position are determined from the RSS data.

Zone proximity results are most effective when the nodes are configured to transmit at very low outputs, say around one-millionth of a watt.

Wi-Fi nodes operate in a completely passive mode. No transmissions are involved. In all other respects, they are identical to the Bluetooth nodes, Wi-Fi nodes listen to mobile device Wi-Fi transmissions and collect the same data items, i.e., MAC address, device type and RSS, and return them to the Managed System Server via the Internet.

## Node network, Scatternet

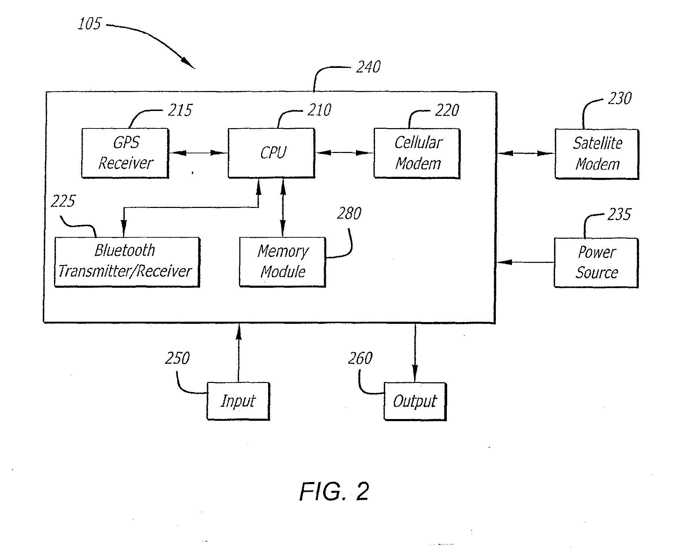

The Bluetooth nodes in the system are capable of maintaining seven simultaneous communications links with other Bluetooth devices. Two of those links are used to form a network or chain with two other nearby nodes. One such chain is shown in Figure 2 where four nodes are connected. Data acquired by each node is passed along the chain from one to another and finally through the base station bridge to the Internet.

## Base Station

The base station consists of two transceivers, one a Bluetooth device, the other a Wi-Fi. The Bluetooth device acts as a node connecting to one or more chains, and passing data from the other nodes on the chain to the Wi-Fi device, which then passes the data to the Internet. A wired base station needs only a single radio.

## Checkout Rate Derivation

The disclosed description delivers precise and secure indoor passive consumer analytics via Bluetooth. This helps drive revenue, optimize store formats, increase operational efficiency, and deliver improved customer satisfaction. No or minimal application is required and no consumer action needed. The data is encrypted and anonymized.

Using the disclosed technology, establishes new benchmarks for grocers that include customers who lane hop. This key driver of CSAT is a new benchmark that is rewriting the lane optimization business.

The system is applicable to mass transit locations with Wi-Fi providers, for instance at airports. The Bluetooth technology provides a precise and secure passive analytics on the market. As cell phones such as smartphones use Bluetooth, the system operates broadly, and no or minimal application or consumer forced interaction is required.

Positioning is by a continuous second polling of the device thereby not losing track of the customer (unlike WI-FI network solutions). The polling of the device can be at a regular rate (not increased), and the positioning algorithm can be run more frequently as needed. The precision as small as a 3' radius zone, provides accurate proximity in market.

These features include

**People Counting**

- Store Peak Traffic
- Store Traffic by Day
- Store Traffic by Hour
- Store Passerby
- Repeat Passerby
- Draw Rates
- Repeat Traffic

**Indoor Precision Location**

- Zone Peak Traffic
- Department Conversion
- Shopping Patterns
- Shopping Segment Time
- Repeat Traffic
- First Location
- Dwell Times
- Shopper Non Buyer

**Queue Management**

- Queue Peak Traffic
- Lane Throughput
- Wait Benchmarking
- Lane Traffic Times/Days
- Lane Hopping
- Basket Size +
- Quick Tripping
- Repeat Customers

**Mass Transit**

- Mass Traffic flow Trending
- Peak Traffic times
- Estimated Wait times
- AB Flow Testing
- Security Queue Management
- Predictive Queuing
- (Ex. Security line 8 has a 12 minute wait time)

**Interior Traffic**

Measure department and intra-department traffic supporting labor allocation, increased conversion, and departmental optimization. The facility can includes an indicator for posting waiting times, selectively including a communication by internet, telephone, message or a display. The facility can be defined as at least one checking station for thoroughfare traffic, selectively being a street or sidewalk.

**One & Done Research**

Quantify research and showrooming behavior by time of day and department. Benchmark "One and Done" at the store level to engage and convert these customers.

WHERE RESEARCHERS GO Opportunity to intercept and convert 52% of customers by knowing what day, location, and time of day this behavior occurs.

**Consumer Intent**

The first visit location is a leading indicator of the shopper's intent coming into the store. See how price, promotion and offer affect overall consumer awareness over time.

**Traffic Footprint and Dwell**

See the brands that drive traffic and engage consumers within each department of your store. In this retailer, 50% of all traffic is concentrated in 40% of the store footprint.

**Wait Times and Lane Hopping**

Optimize registers, manage labor, and increase customer satisfaction by reducing lane hopping occurrences and overall register wait times.

**Basket Size / Quick Trippers**

The basket size algorithm aids to understand shopper behavior patterns. Increase basket size by catering to quick trippers vs. stock up shoppers by day and time.

**MASS MERCHANDISING**

A significant percentage, about 60% of all first visit locations within 30% of the floor footprint can be affected so as to increase conversion by the operator understanding consumer intent. About 40 to 50% of all customers from a mass merchandise retailer stop at one location and leaving a store without going through checkout. The disclosed technology intercepts this and reduces showrooming to thereby convert higher sales

**GROCERS**

Lane hoppers are an issue and the disclosed system can render the lane operation more efficient. While evaluating wait times for a national grocer, about 15% of customers hopped lanes. Lane hopping is the result of lane wait times or insufficient staffing and lane type availability. This can increase customer satisfaction by reducing register wait times.

Quick trippers at a grocer can have about 20% of their customers as quick trippers. This means that customers just come in and go through the checkout line. The system increases basket size by leveraging customer quick trip behavior.

The method and system allows a user to control and monitor individuals, vehicles and other movable entities by using geographical zones. These zones can be pre-configured geographical zones. Such zones have a plurality of nodes. In different situations, messages can be sent between one or more of these mobile users and one or more control stations. The users can be a single user or multiple users in a group with whom there are message communications. The messages can be targeted to the one or multiple users.

The multi-dimensional sense can be a three-dimensional sense in the x, y and z axes or coordinates. The system allows for three-dimensional mapping according to the placement of nodes in a three-dimensional sense. Further messages can be communicated with movable entities according to their location in the three-dimensional space, and the messages may be commercial or emergency messages.

The nodes are preferably part of a mesh network or other suitable network configuration. The nodes preferably communicate with transponders or subscriber devices that can be a cell phone, Personal Digital Assistant (PDA) or similar device using the Bluetooth™ protocol.

In one particular aspect, there is the ability to effect fine resolution determination of a movable entity's location. This can include three-dimensional mapping of that location. Disclosed in the present application is an apparatus and method for the relative precise three-dimensional mapping of a specific location. The apparatus and method can utilize a Bluetooth™ equipped device that communicates wirelessly via Radio Frequency (RF) using Bluetooth™ protocol with location nodes in a mesh network. The Bluetooth™ equipped device uses at least one specific algorithm to determine its three-dimensional location within the mesh network. This resulting location data is used to generate a fine resolution map centering on that specific location.

In another specific aspect, there is the ability to obtain and mine data related to the location of a mobile user. This can include an apparatus and method for mining data relating to the relatively precise three-dimensional location of a user. The apparatus and method can employ a Bluetooth™ equipped mobile personal device associated with a user that communicates wirelessly via RF using Bluetooth™ protocol with location nodes in a mesh network. The Bluetooth™ equipped mobile personal device contains at least one specific algorithm to determine the relatively precise location of the user within the mesh network. When the Bluetooth™ equipped mobile personal device is within the range of certain location nodes, specific events are triggered. These include, but are not limited to, the downloading of appropriate advertisements to the Bluetooth™ equipped mobile personal device. In addition, the location nodes transmit the user's location data to a central station via other nodes within the mesh network, relay stations, and/or intermediate supplementary stations. The user's location data can then be processed and analyzed at the central station and/or intermediate supplementary stations.

In another specific aspect, there is the ability to provide a security support system utilizing three-dimensional user location data. This can include an apparatus and method for providing security support to mobile users using three-dimensional location data of the users. The apparatus and method can employ a Bluetooth™ equipped mobile personal device associated with a user that communicates wirelessly via RF using Bluetooth™ protocol with location nodes in a mesh network. The Bluetooth™ equipped personal device uses at least one downloaded algorithm to determine the relatively specific three-dimensional location of the user within the mesh network. When an emergency event occurs, a central station and/or intermediate supplementary stations transmit emergency notifications to the users that are located within a specific group of nodes in the mesh network. These emergency notifications are transmitted to the users' personal devices via other nodes within the mesh network and/or through relay stations.

In one aspect, there is a method to define a geographical zone, which can be in two or three dimensions, and which can be utilized to regulate a movable entity that has a transponder or subscriber device. The device can be a cell phone, PDA, pager, computer or similar device, which is configured to be in wireless communication with other devices through a suitable network.

The transponder or subscriber device can include many different combinations of the components listed above and/or similar components. For example, a transponder or subscriber device may have two modems, where one modem is a satellite modem and one modem is a cellular modem. Additionally, a transponder or subscriber device can contain a Bluetooth™ equipped receiver, Bluetooth™ equipped transmitter, Bluetooth™ equipped transceiver, and/or GPS receiver in combination with the other components. In one or more embodiments, any or all of the components are co-located on the same integrated circuit (IC) chip within the transponder or subscriber device. The components of the transponder or subscriber device depend upon which capabilities the movable entity requires.

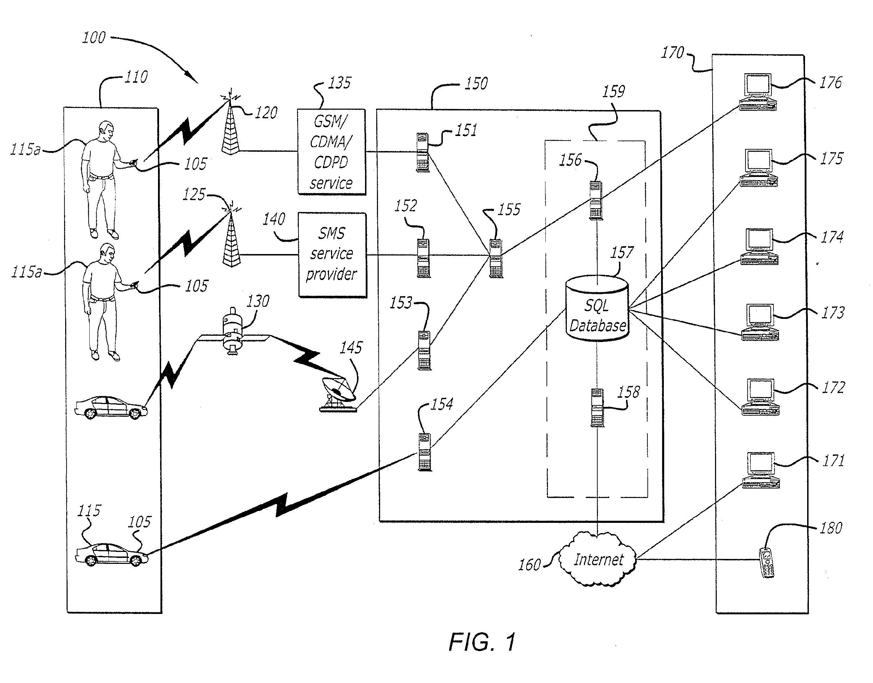

**Figure 1** illustrates the high-level architecture of a computer system for controlling and monitoring movable entities including, but not limited to, vehicles and people. A plurality of vehicles **110** has at least one transponder or subscriber device **105** that can be tracked and allows the functionality to remotely control functionality of the vehicle **115** or an individual **115a.**

The transponder or subscriber device **105** connects with a plurality and any combination of communication networks. In one embodiment, such a communications network is a cellular network including multiple cellular base stations **120** and service providers **135.** In another embodiment, such a communications network is a cellular network including multiple cellular base stations with SMS receivers **125** and service providers **140.** In another embodiment, such a communications network is a satellite network including multiple satellite receivers and transmitters **130** and satellite ground stations **145.** In yet another embodiment, such a communications network is a shortwave radio communications network.

The communications network permits the transponder or subscriber device **105** to communicate with a backend control system **150.** The transponder or subscriber device **105** sends event information to the backend control system **150** and responds to commands sent to the transponder or subscriber device **105** by the backend control system **150** through the communications network. The backend control system **150** includes a plurality of gateways **151, 152, 153** and **154** which interact with a codec **155.** The codec **155** is the central codifier and decodifier of the backend control system **150** and allows the backend control system to adapt and communicate with any communications network. The modular design enables the introduction of new hardware and network protocols without having to change monitoring and reporting software. The backend control system **150** also includes an asynchronous routing system **159** that allows incoming and outgoing communications to be handled asynchronously and efficiently. In one embodiment, the asynchronous routing system **159** includes a plurality of routing services **156,** at least one database **157** and a web server **158.** The messages routed by the routing services **156** are directly communicated to a client console **176.** The client console **176** presents vehicle **115** and transponder or subscriber device **105** information to the operator. The client console **176** sends commands to the transponder or subscriber device **105** through the backend control system **150** and a communication network.

**Figure 1** illustrates the wireless connectivity of the transponder or subscriber device **105** on a vehicle **115** or an individual **115a.** The transponder or subscriber device **105** receives radio signals from a GPS constellation satellite **130** allowing the transponder or subscriber device **105** to process positioning information. The transponder or subscriber device **105** can communicate wirelessly to various networks through multiple wireless devices integrated in the transponder or subscriber device's **105** hardware such as short range radio **154,** a cellular receiver **120** and **125,** and a satellite **130.**

**Transponder or Subscriber Device Hardware Configuration**

**Figure 2** illustrates the internal board **240** of the transponder or subscriber device **105.** The transponder or subscriber device board **240** contains at least one GPS receiver **215,** at least one CPU **210,** at least one cellular modem **220,** and at least one memory module **280.** At least one Bluetooth™ transmitter/receiver **225** can be included in the internal board **240.** The Bluetooth™ transmitter/receiver **225** can be implemented as a transceiver, as a separate transmitter and receiver, a transmitter alone, or a receiver alone. In one embodiment, the tracking system uses utilizes both cellular and satellite networks to provide the most affordable and complete global coverage.

The GPS receiver **215** is capable of positioning accuracy to within a few feet or less. For example, a 12-Channel Trimble SQ, Lapaic UV40, or small-range accurate receivers are contemplated.

The processor **210** is at least a 4-bit processor. The processor **210** includes at least 1 Kilo-byte of RAM. For example, a Motorola MMC2114 32-Bit RISC processor with two built-in UART's is contemplated. However, a similar or more advanced processor is also contemplated. The memory module **280** includes at least two additional memory chips, wherein each additional memory chip is at least 128K.

In one embodiment, the cellular receiver or cellular modem **220** is the primary means for communication. The cellular modem **220** interfaces with at least one on-board processor's built-in serial ports. The cellular modem **220** may be a GSM, CDMA or similar modem. The satellite modem or transceiver **230** is external to the transponder or subscriber device **105** and is connected by a serial port. In one embodiment, the satellite modem **230** is located under fiberglass or any other non-metal material in order to provide maximum coverage. The satellite modem **230** is used primarily when there is little or no cellular coverage, or when the user specifies use of the satellite modem **230.** The efficient use of the satellite modem **230** functions to lower the cost of the tracking system to the user. One embodiment contemplates a satellite modem **230** such as a Sky Wave DMR-200 satellite modem. Similar contemplated satellite modems include features including, but not limited to, incorporating a built-in omni-directional antenna, providing worldwide coverage, and efficiently interfacing with the transponder or subscriber device's processor **210.**

The Bluetooth™ transmitter/receiver **225** has a range of at least 20 meters. For example, in one embodiment, a National Semiconductor Simply Blue LMX9820 Class 2 Bluetooth™ module is contemplated. However, similar or more advanced Bluetooth™ transceivers, transmitters, and/or receivers as well as any other transceiver, transmitter, or receiver that allows for radio connectivity and does not require a line of sight are contemplated. Preferably, the Bluetooth™ transmitter/receiver **225** is installed to utilize different capabilities such as integrating and supporting multiple wireless peripherals, acting as a shortwave radio to download data, or to serve as a local, traveling wireless "hotspot."

In one embodiment, the power source of the transponder or subscriber device, is a fused main power-in source with a recommended operating in a range between 12 and 24 volts. One embodiment contemplates low power consumption (65mA or less) during normal operation. Furthermore, the transponder or subscriber device **105** includes circuitry for charging an optional backup battery. If the primary power source supply is below a minimum acceptable level, the transponder or subscriber device **105** will automatically switch to a backup power source as well as transmit a message identifying that the primary power source is at a critically low level.

The transponder or subscriber device **105,** such as a cell phone or PDA, is a small and affordable unit with numerous features. The external view of the transponder or subscriber device is illustrated in **Figure 3.** In one embodiment, the housing **335** of the transponder or subscriber device **105** is manufactured from plastic, metal, or any other material that functions to protect the inner components from external events such as physical damage, dust, water, excessive temperatures or any other event which could affect the integrity of the transponder or subscriber device. In one or more embodiments, the transponder or subscriber device **105** contains external communication ports, a multiple pin connector, at least four control outputs, a modem antenna connector, several indicators and/or a GPS antenna. In another embodiment, a Bluetooth™ antenna is incorporated in the transponder or subscriber device **105**.

There can be a passenger counter, which can interface with several door infrared motion sensors for the purpose of counting the number of people entering or exiting from at least one door of, for instance, a building or a room. A serial port can also be used to test and configure applications within the transponder or subscriber device **105.** In one embodiment, the serial port functions as a programming port which is used when programming the unit for the first time or re-programming the unit's core program.

The indicators associated with the transponder or subscriber device **105** can be for any type of connection, signal, power level, status, and any other similar communications. In one embodiment, an indicator is a light-emitting diode (LED) that appears red when the transponder or subscriber device **105** has power connected to it. Another indicator can be an LED that blinks green at a rapid pace when the GPS receiver is establishing a connection and slowly blinks green when a connection is established. Another indicator can be an LED light that blinks green for every message received, and red for every message sent. Another indicator can be an LED that is red when the cellular modem **220** is roaming, and is green when it is at home.

**Transponder or Subscriber Device Firmware Configuration**

The transponder or subscriber device **105** has numerous features, functions, and capabilities described below. The transponder or subscriber device **105** is an intelligent device controlled by an at least 4-bit processor **210. Figure 2** depicts one embodiment where the processor **210** has the capability to interface with a GPS receiver **215,** a cellular modem **220,** a Bluetooth™ transmitter/receiver **225,** a memory module **280,** and a satellite modem **230.**

The transponder or subscriber device **105** can be configured to report, observe, and analyze numerous logical events. The transponder or subscriber device is also configurable to give and respond to various commands, and contains a configurable history-recording component. A further benefit of the present disclosure is that all the configurations to the transponder or subscriber device 105 can be done locally or wirelessly. Thus, the user is able to configure any features including the entire operating system of the transponder or subscriber device wirelessly. This wireless configuration can be accomplished through the use of the cellular modem **220,** the Bluetooth™ transmitter/receiver **225,** or any other wireless means.

Moreover, the transponder or subscriber device **105** can be configured locally through connecting to a serial port. Another benefit of the present disclosure is that during wireless or local configuration, the transponder or subscriber device **105** continues to operate normally. This means that the transponder or subscriber device **105** can be configured with losing little to no operability. Wireless configuration commands change the parameters used for processing physical and logical events on the fly. Wireless operating system updates are achieved using two executable code spaces, and a temporary code space for loading new code. Once the uploading of new code into the temporary code space is completed, the transponder or subscriber device reboots, copies the new code into the secondary executable code space, and resumes execution with the most recent update.

Incoming messages from transponder or subscriber devices **105** may also be forwarded to an email address, cellular telephone, or any other communications device. To achieve this functionality, the history recorder **641** also transmits the geocoded locations to remote notify routers **681** by placing the geocoded locations in a remote notify queue **680.** The remote notify router **681** that receives the geocoded location and event information queries the fleet database **670** to determine whether the configuration information associated with the transponder or subscriber device **105** requires a notification to a communications device **180,** as shown in **Figure 1.** If a notification is required, the remote notify router **681** retrieves the contact information for the appropriate communications device **180.** The remote notify router **681** then formats and encodes the message to be sent to the communications device **180.** The message is placed in the outbound SMTP queue **664** to be sent through the SMTP gateway **154.** Alternatively, the message can be placed in the outbound SMS queue **662** to be sent through the SMPP gateway **152.**

The real time database **630** is also updated with the new event information associated with the incoming message. Thus, the real time database **630** contains the latest information reported on a given transponder or subscriber device **105.** The real time database **630** is connected to a web server **158.** The web server **158** is directly connected to the Internet **160** and allows users of a web-tracking application **171** to make location requests, command requests **632,** and report requests. When a web server **158** receives a location request from the web tracking application **171,** the web server **158** queries the history database **642.** The history database **642** contains all events in a chronological order. The web server **158** retrieves all transactions related to the web tracking application **171** query, and forwards the data to the web tracking application **171** for displaying to the user in a web browser.

When a web server **158** receives a location request from the web tracking application **171,** the web server **158** queries the real time database **630** for the corresponding transponder or subscriber device **105** information. The real time database **630** provides transponder or subscriber device information as related to the very last incoming message from the incumbent transponder or subscriber device **105.** The web tracking application **171** may also send a command request **632** such as a query as to the position of the transponder or subscriber device **105.** The command request **632** is sent to the command receiver **690** which, in turn, processes the position request command by activating the appropriate transponder or subscriber device **105** information. The message is encoded by the codec **155,** placed in the appropriate outbound queue **661-664** and sent through the corresponding gateway system **151-154** to the transponder or subscriber device **105.** The transponder or subscriber device **105** will then send back a response. The backend control system **150** then processes the response, and accordingly updates the real time database **630.** After the real time database **630** has been updated, the web server **158** may refresh the contents of the web tracking application **171,** thereby showing the new position of the transponder or subscriber device **105.**

The system permits for individual, vehicles or other persons to be communicated to in areas and spaces that can be isolated and separated from other areas and spaces. In this manner if there is a security situation in one place, individuals or vehicles or other mobile entities can be targeted with messages or instructions to remain in a location removed or isolated from a danger area.

While the above description contains many specifics, these should not be construed as limitations on the scope of the disclosure, but rather as an exemplification of one embodiments thereof.

A transponder or subscriber device can be mounted, attached, manufactured, or otherwise included upon or within these various articles. The transponder or subscriber device is contemplated to be of many different sizes including nano- and/or micro scale- transponder or subscriber device. Within the context of the tracking system, the transponder or subscriber device works to collect, process, and communicate various information about the article or vehicle the transponder or subscriber device is attached to.

Furthermore, the disclosure includes any combination or subcombination of the elements from the different species and/or embodiments disclosed herein. One skilled in the art will recognize that these features, and thus the scope of this disclosure, should be interpreted in light of the following claims and any equivalents thereto.

**Claims**

1. A method of providing a location-based service to an operator of a facility, the facility being a physically defined structure formed by physical walls comprising:

   providing in the facility a series of location nodes, the location nodes including transceivers of wireless signals, and being for transmitting the signals received to a central hub for processing the received signals;
   the nodes being located in strategic positions in the facility, the nodes being for wireless communication with movable human entities in the facility thereby to establish the location and movement of human entities in the facility, the human entities having wireless communicating units for transmitting and receiving signals wirelessly to the nodes, each unit being unique for each human entity;
   the nodes including a detection device, the device including radio transmitter/receivers, the device being capable of detecting the zone entry and exit events of the human entities, and wireless communicating units of human entities, the wireless communicating units being a mobile phone equipped with selectively a Bluetooth or WI-FI radio or NFC system;
   the nodes providing data about the movement of the human entities in the facility, such data including entry into the facility and departure from the facility, and additionally at least one of amount of time spent in the vicinity of nodes located in strategic positions; the travel path of the entities in the facility; and
   the data being transmitted to the operator in at least one of real time or being for storage and analysis at a later time for use by the operator; and
   an algorithm, executed by a computer processor, for processing the data, the data including entry into the facility, departure from the facility and selectively, the number of stops made throughout the facility,
   wherein the algorithm determines the number of needed lanes, LX wherein

$$LX = R1(nS/100)T1$$

   where:

   LX = Number of required Express lanes,
   R1 = Visitor entry rate,
   nS = Percent of small-volume visitors, and
   T1 = Checkout rate for Express lane.

2. The method of claim 1 wherein the facility includes multiple checkout locations wherein persons leaving the facility need to pass through at least one of the checkout locations prior to leaving the facility, and wherein nodes are located in a physical location to be related to different respective checkout locations of the multiple checkout locations, and wherein data from the location nodes includes at least one of the number of human entities passing through different checkout locations, the speed with which human entities pass through the different checkout locations, and the number of human entities in the vicinity of the different respective checkout locations.

3. The method of claim 1 or 2 wherein the facility is a shopping business and the checkout locations include registers for receiving payment for items purchased in the shopping business, and the data includes the rate at which entities enter and leave the facility, and at least one of:

the human entity check-out rate from the facility;
the human entity entry volume to the facility,
the human entity entry volume relative to
different time periods;
the amount of time spent by different
human entities in the facility;
data relating to distinguish the number of human entities spending different amounts of time in the facility; and
wherein different check-out facilities are designated for low volume shoppers in dedicated checkout facilities and the data includes information about the numbers of the low volume shoppers, and
high volume shoppers, and
the rate of time shoppers spend in the facility and at the checkout locations, and the algorithm processing the data.

4. The method of any one of claim 1 to 3 wherein the system includes three dimensional geographical zones for characterizing the movement in the three dimensional geographical zones and behavior patterns of a human mobile user moving through an array of the geographical zones, the human user having a mobile phone equipped with selectively a Bluetooth or WI-FI radio or NFC system.

5. The method of claim 1 to 4 wherein as a mobile user moves through the store, zone entry and exit events are collected, time stamped, and passed along the networks to the Internet, and selectively an event trail is obtained and, the data is routed to a remote server and placed in a database for analysis where behavior details are extracted from the entry/exit data.

6. The method of claim 2 wherein the facility is a shopping business and includes checkout locations include registers for receiving payment for items purchased in the shopping business, and the data includes resultant data sets applying the algorithm to manage checkout lane allocations based on visitor rate of entry and visitor rate of checkout, and wherein checkout rates are used to determine lane allocations with a capacity to check-out visitors at the same rate as they are entering the store, and
providing for a substantially continuous flow of visitors from entry into the checkout to exit from the checkout and relative to the rate they are entering the store, and the algorithm processing the data.

7. The method of claim 1 to 6 wherein the algorithm establishes a visitor checkout rate for small basket, medium basket, and large basket visitors from empirical checkout data, visitor entry rate and visitor information is used to determine selectively the number of small basket, medium basket, and large basket visitors, and selectively establishes check-out rates, the rates being used to determine the required number of lanes to checkout the number of small, medium size and large basket visitors at the same rate as the rate of entry.

8. The method of claim 7 wherein the algorithm output is selectively a daily timeline defining the number and type of lane allocations, selectively express and normal lanes for different times of the working day for different days of the week, thereby providing a tool for preplanning store operations and personnel assignments.

9. The method of claim 2 wherein the facility is a shopping business and the checkout locations include registers for receiving payment for items purchased in the shopping business, and the data includes at least three or five or all of:

a) the human entity check-out rate from the facility;
b) the human entity entry volume to the facility,
c) the human entity entry volume relative to different time periods;
d) the rate at which human entities enter and leave the facility;
e) the amount of time spent by different human entities in the facility;
f) data relating to distinguish the number of human entities spending different amounts of time in the facility; and
g) wherein different check-out facilities are designated for low volume shoppers in dedicated checkout facilities and the data includes information about:

i. the numbers of the low volume shoppers, and
ii. the numbers of high volume shoppers;

h) the rate of time shoppers spend in the facility, and
i) the rate of time shoppers spend at the checkout locations; and
the algorithm processing the data.

10. The method of claim 1 including identifying the same human entities repetitively when they are repetitively in the facility, and thereby obtain data about the shopping activities of that human entity, or including identifying the human entities independently of the shopping basket, and thereby obtain data about the shopping activities of that human entity.

11. The method of claim 1 wherein the algorithm output is selectively a daily timeline defining the number and type of lane allocations, selectively express and normal lanes for different times of the working day for different days of the week, thereby providing a tool for preplanning store operations and personnel assignments.

12. The method of any one claims 1 to 11 wherein the algorithm determines the number of needed lanes wherein LN = R1(nLG/100)T2, where:

LN = Number of required Normal lanes,
R1 = Visitor entry rate,
nLG = Percent of large- volume visitors, and
T2 = Checkout rate for Normal lane.

13. The method of any one claims 1 to 12 to wherein the algorithm determines the number of needed lanes wherein LN = R1(nLG/100)T2, where

LN = Number of required Normal lanes,
R1 = Visitor entry rate,
nLG = Percent of large-volume visitors, and
T2 = Checkout rate for Normal lane.

14. A method of providing a location-based service to an operator of a facility comprising:

providing in the facility a location node, the location node including a transceiver of wireless signals, and being for transmitting the signals received to a central hub for processing the received signals;
the node being located in a specific location in the facility, the node being for wireless communication with movable human entities in the facility thereby to establish the location and movement of human entities in the facility, the human entities having wireless communicating units for transmitting and receiving signals wirelessly to the node, each unit being unique for each human entity;
each node including detection devices, the devices including radio transmitter/receivers, the devices being capable of detecting the zone entry, dwell and exit events of the human entities, and wireless communicating units of human entities, the wireless communicating units being a mobile phone equipped with selectively a Bluetooth or WI-FI radio or NFC system;
the nodes providing data about the movement of the human entities in the facility relative to the location,_such data including entry into the location and departure from the location amount of time spent in the vicinity of the location;
the data being transmitted to the operator in at least one of real time or being for storage and analysis at a later time for use by the operator,
an algorithm, executed by a computer processor, for processing the data, the data including entry into the location and departure from the location,
wherein the algorithm establishes parameters based on the rate of entities entering a line in the facility and the rate of entities departing from the line in the facility, and

wherein the facility is an airport terminal and includes at least one security checking location, and wherein persons passing through the airport terminal facility need to pass the security checking location without bypassing through the security checking location, and wherein a node is located in a physical location to be related to the at least one security checking location and wherein data from the location nodes includes the speed with which entities pass through the security checking location, and selectively an indicator of the number of entities in the vicinity of the security checking location.

FIG. 1

FIG. 2

*FIG. 3*

FIG. 4

| INTERIOR ZONE PEAK TRAFFIC TIMES | | | | | | | | | | | |
| --- | --- | --- | --- | --- | --- | --- | --- | --- | --- | --- | --- |
| GROCERY | | | | | | SERVIES | | | | | |
| TIME | FROZEN | SNACKS | CANNED | SEAFOOD | PRODUCE | LIQOUR | CHECK CASHING | RX MEDICINE | RX DRUG | DELI | FLORAL | CHECKOUT LANES |

FIG. 6

*FIG. 8*

*FIG. 7*

25

FIG. 9

FIG. 10

FIRST VISIT LOCATION

| | ZONE | RANKED TRAFFIC |
|---|---|---|
| 1 | Mobile Sales | 16.0% |
| 2 | Samsung | 14.0% |
| 3 | Customer Service | 13.0% |
| 4 | Laptops | 11.0% |
| 5 | Solution Central | 8.0% |
| 6 | Heatwall Zone 3 | 8.0% |
| 7 | Apple Tables | 7.0% |
| 8 | Gaming | 4.5% |
| 9 | Cameras | 3.5% |
| 10 | Heatwall Zone 2 | 3.0% |
| 11 | Checkout | 2.5% |
| 12 | End Cap 3 | 2.0% |
| 13 | Geep Squad Computer | 1.5% |
| 14 | Pacific Sales - Highland | 1.0% |
| 15 | Heatwall Zone 1 | 1.0% |
| 16 | Discovery Table 1 | 1.0% |
| 17 | Dyson | 1.0% |
| 18 | Tablets / E-readers | 0.5% |
| 19 | End Cap 1 | 0.5% |
| 20 | Discovery Table 3 | 0.5% |
| 21 | Pacific Sales POS | 0.5% |
| 22 | In-Store Pickup | 0.0% |
| 23 | End Cap 4 | 0.0% |
| 24 | Home Theater Desk | 0.0% |
| 25 | Discovery Table 2 | 0.0% |
| 26 | End Cap 2 | 0.0% |
| 27 | TV - Samsung | 0.0% |
| 28 | TV- Sharp | 0.0% |
| 29 | Magnolia Design Center | 0.0% |

FIG. 11

FIG. 12

| MONTH \ ZONE | 53.5% | | | | | 30.5% | | | | 15.9% | | | | |
|---|---|---|---|---|---|---|---|---|---|---|---|---|---|---|
| | Samsung | Cameras | Sony | Apple | Computers | Phones | Pioneer | Customers Support | In-Store Pickup | Tablets | Computer Accessories | Software | Apparel | Peripherals |
| Mar | 11.9% | 11.6% | 11.2% | 10.9% | 9.6% | 9.0% | 7.9% | 6.7% | 7.1% | 6.4% | 2.9% | 2.7% | 1.6% | 0.5% |
| Apr | 11.6% | 11.2% | 10.7% | 10.3% | 9.3% | 8.8% | 7.5% | 7.2% | 8.2% | 6.8% | 3.0% | 2.8% | 1.9% | 0.9% |
| May | 11.6% | 10.9% | 10.7% | 10.3% | 9.3% | 9.0% | 7.6% | 7.3% | 7.2% | 7.1% | 3.1% | 2.9% | 2.1% | 1.0% |
| Jun | 12.0% | 11.0% | 10.4% | 9.6% | 9.4% | 9.5% | 7.5% | 7.1% | 7.9% | 7.0% | 3.0% | 2.7% | 2.2% | 0.8% |
| Jul | 11.8% | 10.9% | 10.1% | 10.0% | 9.5% | 9.4% | 7.5% | 7.1% | 7.6% | 6.9% | 3.0% | 2.8% | 2.2% | 1.1% |
| Aug | 12.4% | 11.3% | 10.6% | 9.6% | 9.5% | 9.6% | 7.5% | 6.7% | 7.1% | 6.5% | 3.3% | 2.9% | 2.1% | 1.1% |
| Sep | 12.1% | 11.7% | 10.8% | 9.9% | 10.0% | 9.3% | 7.9% | 7.3% | 6.3% | 5.6% | 3.1% | 2.9% | 2.3% | 0.8% |
| Oct | 12.7% | 11.7% | 10.6% | 10.3% | 9.4% | 7.6% | 7.9% | 7.0% | 5.4% | 5.2% | 3.6% | 3.7% | 3.2% | 1.6% |
| Nov | 12.8% | 11.9% | 11.2% | 9.3% | 9.0% | 8.6% | 7.4% | 7.1% | 5.8% | 5.9% | 4.0% | 3.0% | 2.5% | 1.3% |
| Dec | 12.8% | 11.5% | 11.2% | 9.2% | 8.3% | 9.3% | 7.2% | 6.4% | 6.8% | 4.6% | 5.0% | 3.7% | 2.5% | 1.5% |
| ZONE AVERAGE | 12.2% | 11.4% | 10.7% | 9.9% | 9.3% | 9.0% | 7.6% | 7.0% | 7.0% | 6.2% | 3.4% | 3.0% | 2.2% | 1.1% |

Traffic Concentration In These Areas

FIG. 13

| | ZONE | RANKED TRAFFIC |
|---|---|---|
| 1 | Geek Squad Computer | 5.80 |
| 2 | Samsung | 5.30 |
| 3 | Laptops | 4.40 |
| 4 | Mobile Sales | 3.40 |
| 5 | Pacific Sales - HighEnd | 3.30 |
| 6 | Discovery Table 3 | 3.15 |
| 7 | Desktops | 2.90 |
| 8 | Customer Service | 2.70 |
| 9 | Heatwall Zone 3 | 2.30 |
| 10 | Pacific Sales POS | 2.21 |
| 11 | Solution Central | 2.20 |
| 12 | Checkout | 1.90 |
| 13 | Tablets/E-readers | 1.90 |
| 14 | Heatwall Zone 1 | 1.70 |
| 15 | Apple Tables | 1.60 |
| 16 | End Cap 3 | 1.50 |
| 17 | Cameras | 1.40 |
| 18 | Gaming | 1.20 |
| 19 | Heatwall Zone 2 | 1.20 |
| 20 | In-Store Pickup | 1.20 |
| 21 | End Cap 4 | 1.20 |
| 22 | End Cap 1 | 0.90 |
| 23 | Magnolia Design Center | 0.87 |
| 24 | Home Theater Desk | 0.80 |
| 25 | TV - Samsung | 0.76 |
| 26 | TV - Sharp | 0.67 |
| 27 | End Cap 2 | 0.47 |
| 28 | Discovery Table 2 | 0.43 |
| 29 | Discovery Table 1 | 0.31 |
| 30 | Dyson | 0.13 |

AVERAGE DWELL TIME PER ZONE

TV-Sharp
Heat Wall Zone 1 1.7 min
Heat Wall Zone 2 1.2 min
Heat Wall Zone 3 2.3 min
TV-Samsung
Magnolia Design Center
0.0%
End Cap 0.0%
Laptops
MDC 0.872 min
Gaming 1.2 min
Laptops 2.9 min
End Cap 2 0.0 min
Dyson 1.0%
PAC
Samsung 5.3 min
Solutions 2.3 min
Solutions 1.2 min
Apple 1.6 min
End Cap 2 0.0 min
PAC
Cameras
Tablet E/Readers 1.5 min
Mobile 3.4 min
PAC 3.3 min
PAC 3.3 min
Cameras 1.4 min
1.2 min
Checkout 1.9 min
Customer Service 2.7 min
Geek Squad Computers 5.8 min

EP 2 775 458 A2

FIG. 14

FIG. 15

EP 2 775 458 A2

**AVERAGE DWELL PER REGISTER (MINUTES)**

Store 782 Dwell 12/15/2012 to 12/20/2012

4.4 Min — 2
3.0 Min — 4
2.6 Min — 6
2.6 Min — 8

1.8 Min — 12
2.8 Min — 14
3.7 Min — 16
3.2 Min — 18

1.2 Min — 11

3.8 Min — 1
3.1 Min — 3
3.0 Min — 5
2.4 Min — 7
1.9 Min — 9
1.6 Min — 10
2.1 Min — 13
3.3 Min — 15
3.2 Min — 17

FIG. 16

| | SUNDAY | | MONDAY | | TUESDAY | | WEDNESDAY | | THURSDAY | | FRIDAY | | SATURDAY | |
|---|---|---|---|---|---|---|---|---|---|---|---|---|---|---|
| | | | | | **WHEN LANE HOPPING AT CHECKOUT REGISTER OCCURS** | | | | | | | | | |
| | | | | | Occurrence by Day of Week and Time of Day | | | | | | | | | |
| TIME | HOPPING | LANES OPEN | HOPPING | LANES OPEN | HOPPING | LANES OPEN | HOPPING | LANES OPEN | HOPPING | LANES OPEN | HOPPING | LANES OPEN | HOPPING | LANES OPEN |
| 6 AM | 0% | 1 | 0% | 2 | 5% | 3 | 1% | 3 | 3% | 4 | 8% | 1 | 1% | 2 |
| 7 AM | 4% | 3 | 4% | 3 | 2% | 3 | 2% | 4 | 4% | 6 | 5% | 3 | 3% | 7 |
| 8 AM | 6% | 10 | 1% | 2 | 7% | 4 | 1% | 6 | 3% | 5 | 0% | 10 | 2% | 10 |
| 9 AM | 1% | 7 | 4% | 7 | 6% | 5 | 6% | 8 | 5% | 7 | 3% | 7 | 9% | 10 |
| 10 AM | 7% | 12 | 12% | 8 | 8% | 11 | 5% | 8 | 14% | 10 | 3% | 12 | 6% | 12 |
| 11 AM | 3% | 12 | 8% | 10 | 7% | 11 | 12% | 10 | 4% | 10 | 12% | 12 | 7% | 12 |
| 12 PM | 17% | 12 | 4% | 9 | 3% | 9 | 9% | 12 | 13% | 10 | 5% | 12 | 14% | 11 |
| 1 PM | 12% | 12 | 12% | 9 | 3% | 11 | 7% | 12 | 11% | 11 | 5% | 12 | 6% | 12 |
| 2 PM | 9% | 11 | 7% | 13 | 10% | 12 | 4% | 11 | 11% | 13 | 10% | 11 | 9% | 13 |
| 3 PM | 3% | 12 | 22% | 11 | 11% | 14 | 10% | 13 | 12% | 11 | 15% | 12 | 8% | 14 |
| 4 PM | 9% | 14 | 7% | 16 | 10% | 14 | 12% | 13 | 4% | 10 | 15% | 14 | 5% | 14 |
| 5 PM | 6% | 12 | 4% | 14 | 5% | 12 | 9% | 13 | 6% | 11 | 5% | 12 | 10% | 15 |
| 6 PM | 3% | 13 | 6% | 12 | 10% | 13 | 5% | 13 | 2% | 9 | 4% | 13 | 10% | 13 |
| 7 PM | 9% | 8 | 2% | 10 | 3% | 8 | 5% | 10 | 4% | 7 | 1% | 8 | 5% | 8 |
| 8 PM | 1% | 6 | 25% | 9 | 2% | 6 | 12% | 11 | 0% | 4 | 3% | 6 | 2% | 9 |
| 9 PM | 6% | 4 | 1% | 5 | 3% | 5 | 0% | 7 | 2% | 5 | 4% | 4 | 0% | 5 |
| 10 PM | 3% | 3 | 2% | 5 | 3% | 5 | 2% | 5 | 2% | 5 | 0% | 3 | 0% | 3 |
| 11 PM | 1% | 2 | 1% | 1 | 0% | 1 | 0% | 2 | 2% | 3 | 3% | 2 | 0% | 1 |

*FIG. 17*

EP 2 775 458 A2

*FIG. 18*

| SHOPPER TYPE | WHEN THEY SHOP | % OF QUICK TRIPPERS |
|---|---|---|

**BASKET SIZING — STOPS WITHIN MINUTES**

| STOPS | MINUTES | BASKET SIZE | SHOPPER S |
|---|---|---|---|
| 1 | 1 | S | 28.6% |
| 2 | 3 | | |
| 3 | 3 | | |
| 4 | 8 | | |
| 5 | 11 | | |
| 6 | 13 | M | 49.6% |
| 7 | 14 | | |
| 8 | 15 | | |
| 9 | 17 | | |
| 10 | 20 | | |
| 11 | 19 | | |
| 12 | 20 | | |
| 13 | 23 | L | 20.7% |
| 14 | 25 | | |
| 15 | 22 | | |

78.2%

**BASKET SIZE — BASKET SIZE BY HOUR**

| TIME | S | M | L |
|---|---|---|---|
| 6am | 0.8% | 1.2% | 0.2% |
| 7am | 1.6% | 1.7% | 0.7% |
| 8am | 1.4% | 2.8% | 1.5% |
| 9am | 1.5% | 2.8% | 1.0% |
| 10am | 2.0% | 2.9% | 1.6% |
| 11am | 1.4% | 3.1% | 1.7% |
| 12pm | 1.6% | 3.0% | 1.5% |
| 1pm | 1.7% | 3.6% | 1.7% |
| 2pm | 1.6% | 3.6% | 1.8% |
| 3pm | 1.7% | 3.6% | 1.7% |
| 4pm | 1.9% | 3.5% | 1.6% |
| 5pm | 2.2% | 3.4% | 1.4% |
| 6pm | 1.7% | 3.4% | 1.5% |
| 7pm | 1.5% | 2.9% | 1.2% |
| 8pm | 2.1% | 2.5% | 1.2% |
| 9pm | 1.1% | 2.7% | 0.5% |
| 10pm | 1.7% | 1.5% | 0.7% |
| 11pm | 0.8% | 1.1% | 0.3% |

**QUICK TRIPPERS — QT BY HOUR**

| TIME | SHARE OF SHOPPERS | |
|---|---|---|
| 6am | 23.1% | 25.0% |
| 7am | 27.4% | |
| 8am | 15.8% | |
| 9am | 15.8% | |
| 10am | 19.0% | |
| 11am | 15.1% | |
| 12pm | 14.0% | |
| 1pm | 15.8% | |
| 2pm | 14.3% | |
| 3pm | 13.4% | |
| 4pm | 16.1% | |
| 5pm | 18.0% | |
| 6pm | 17.0% | |
| 7pm | 14.7% | |
| 8pm | 15.3% | |
| 9pm | 15.3% | |
| 10pm | 34.4% | 28.0% |
| 11pm | 22.6% | |

*FIG. 19*

*FIG. 20*

Visitor Checkout Rate
Express Lane
minutes/visitor/lane Normal Lane
minutes/Visitor/lane

Visitor Volume
visitors/hour/day of week

Ratio of Small Large
Basket Visitors

Visitor Entry Rate
Visitors/minute

Small basket  %
Large Basket  %

Number of small basket visitors
Number of large basket visitors

Small basket
checkout rate

Number of
Express Lanes

Large basket
checkout rate

Number of
Express Lanes

Report:
Daily, hourly timeline
Number of Express lanes
Number of Normal Lanes

FIG. 21

*FIG. 22*

*FIG. 23*